# EUROPÄISCHE PATENTANMELDUNG

(11) **EP 4 696 527 A1**
(43) Veröffentlichungstag der Anmeldung: **18.02.2026**
(21) Anmeldenummer: 25191194.7
(22) Anmeldetag: 23.07.2025
(51) Int. Cl.: B60D 1/06, B60D 1/26, B60D 1/54, B60D 1/24

(54) **ANHÄNGEKUPPLUNG**

(30) Priorität: 15.08.2024 DE 102024123336
(71) Anmelder: ACPS Automotive GmbH, 74379 Ingersheim (DE)
(72) Erfinder: Gentner, Wolfgang, 71711 Steinheim (DE)
(74) Vertreter: Hoeger, Stellrecht & Partner Patentanwälte mbB

(57) **Zusammenfassung**

Um eine Anhängekupplung, umfassend einen zwischen einer Arbeitsstellung und einer Ruhestellung bewegbaren Kugelhals der an einem ersten Ende mit einer Schwenklagereinheit verbunden ist und an einem zweiten Ende eine Kupplungskugel trägt, wobei mittels der Schwenklagereinheit, der Kugelhals zur Ausführung einer Schwenkbewegung um eine Schwenkachse zwischen der Arbeitsstellung und der Ruhestellung verschwenkbar ist, und eine zwischen einem Führungskörper und einem Schwenklagerkörper der Schwenklagereinheit wirkende Drehblockiereinrichtung mit mindestens zwei Drehblockiereinheiten, von denen jede einen Drehblockierkörper aufweist, der mittels einer Führungsaufnahme des Führungskörpers in einer Führungsrichtung bewegbar geführt ist und der in der Führungsrichtung durch eine quer zur Führungsrichtung verlaufende, an einem Betätigungskörper vorgesehene Druckfläche bewegbar ist, derart zu verbessern, dass diese eine einfach zu realisierende Sicherung des Betätigungskörpers in den Drehblockerstellungen realisiert, wird vorgeschlagen, dass eine Blockiereinrichtung vorgesehen ist, welche einen Blockierkörper umfasst, der in eine den Betätigungskörper in den Drehblockierstellungen sichernde Sicherungsstellung und eine außerhalb der Sicherungsstellung liegende Bereitschaftsstellung bewegbar ist.

## Beschreibung

Die Erfindung betrifft eine Anhängekupplung, umfassend einen zwischen einer Arbeitsstellung und einer Ruhestellung bewegbaren Kugelhals, der an einem ersten Ende mit einer Schwenklagereinheit verbunden ist und an einem zweiten Ende eine Kupplungskugel trägt, wobei mittels der Schwenklagereinheit der Kugelhals zur Ausführung einer Schwenkbewegung um eine Schwenkachse zwischen der Arbeitsstellung und der Ruhestellung verschwenkbar ist, und eine zwischen einem Führungskörper und einem Schwenklagerkörper der Schwenklagereinheit wirkende Drehblockiereinrichtung mit mindestens zwei Drehblockiereinheiten, von denen jede einen Drehblockierkörper aufweist, der mittels einer Führungsaufnahme des Führungskörpers in einer Führungsrichtung bewegbar geführt ist und der in der Führungsrichtung durch eine quer zur Führungsrichtung verlaufende, an einem Betätigungskörper vorgesehene Druckfläche bewegbar ist, wobei durch eine Bewegung des Betätigungskörpers in einer Betätigungsrichtung die Drehblockierkörper aller Drehblockiereinheiten in der Führungsrichtung bewegbar und beaufschlagbar sind und wobei die Drehblockierkörper aller Drehblockiereinheiten in der Arbeitsstellung oder der Ruhestellung durch Bewegung in der Führungsrichtung in eine Drehblockierstellung bringbar sind und in dieser jeder Drehblockierkörper mit jeweils einer der mindestens zwei Arbeitsstellungsaufnahmen oder einer der mindestens zwei Ruhestellungsaufnahmen in Eingriff kommt, um eine Schwenkbewegung des Schwenklagerkörpers und des Führungskörpers um die Schwenkachse relativ zueinander zu blockieren, und wobei die Drehblockierkörper in eine Lösestellung bringbar sind und in dieser mit der jeweiligen Arbeitsstellungsaufnahme oder der jeweiligen Ruhestellungsaufnahme außer Eingriff stehen und die Schwenkbewegung zwischen dem Schwenklagerkörper und dem Führungskörper freigeben, wobei in allen vorgesehenen relativen Schwenkstellungen zwischen dem Schwenklagerkörper und dem Führungskörper, ausgenommen die Arbeitsstellung und die Ruhestellung eine Bewegung des Betätigungskörpers in der Betätigungsrichtung und folglich auch ein kraftbeaufschlagtes Eingreifen der Drehblockierkörper jeder der Drehblockiereinheiten in jeweils eine der Arbeitsstellungsaufnahmen oder der Ruhestellungsaufnahmen blockiert ist.

Ausgehend von den bekannten Lösungen ist die Aufgabe der Erfindung, deren Funktionen zu optimieren.

Diese Aufgabe wird bei einer Anhängekupplung der gattungsgemäßen Art dadurch gelöst, dass eine Blockiereinrichtung vorgesehen ist, welche einen Blockierkörper umfasst, der in eine den Betätigungskörper in den Drehblockierstellungen sichernde Sicherungsstellung und eine außerhalb der Sicherungsstellung liegende Bereitschaftstellung bewegbar ist.

Der Vorteil der erfindungsgemäßen Lösung ist somit darin zu sehen, dass in dieser eine einfach zu realisierende Sicherung des Betätigungskörpers in den Drehblockierstellungen realisierbar ist.

Insbesondere erfolgt dabei die Sicherung des Betätigungskörpers in den Drehblockierstellungen sowohl in der Arbeitsstellung als auch in der Ruhestellung.

Dabei ist es besonders günstig, wenn der Blockierkörper an dem, insbesondere in dem Führungskörper der Schwenklagereinheit geführt ist.

Insbesondere ist es dabei von Vorteil, wenn der Blockierkörper in einer am Führungskörper angeordneten Führung geführt ist.

Hinsichtlich der Anordnung der Führung für den Blockierkörper am Führungskörper wurden bislang keine näheren Angaben gemacht.

So sieht eine vorteilhafte Lösung vor, dass die Führung für den Blockierkörper in einem an dem Betätigungskörper angrenzenden Wandbereich des Führungskörpers angeordnet ist.

Insbesondere liegt dieser Wandbereich des Führungskörpers zwischen dem Betätigungskörper einerseits und auf dem Schwenklagerkörper, insbesondere in einem Endflansch desselben, andererseits.

Die Bewegungen des Blockierkörpers in der Führung könnten in unterschiedlichster Art und Weise realisiert sein.

Eine konstruktiv besonders vorteilhafte Lösung sieht jedoch vor, dass der Blockierkörper in der Führung in Richtung ungefähr parallel zu der Schwenkachse bewegbar ist.

Des Weiteren ist vorzugsweise vorgesehen, dass der Blockierkörper in der jeweiligen Sicherungsstellung in eine Aufnahme in dem Betätigungskörper eingreift, um diesen in der Drehblockierstellung zu sichern.

Des Weiteren wurden hinsichtlich der Bereitschaftsstellung keine näheren Angaben gemacht.

So sieht eine vorteilhafte Lösung vor, dass der Blockierkörper in der Bereitschaftsstellung angrenzend an den Betätigungskörper positioniert ist.

Des Weiteren hat es sich hinsichtlich der Einfachheit der zu realisierenden Lösung als günstig erwiesen, wenn der Blockierkörper in der Sicherungsstellung ausgehend von und geführt durch die Führung jeweils mit einem Ende in die Aufnahme des Betätigungskörpers eingreift.

Des Weiteren hat es sich als vorteilhaft erwiesen, wenn der Blockierkörper durch eine Betätigungseinrichtung in der Sicherungsstellung festlegbar ist.

Eine derartige Betätigungseinrichtung kann in unterschiedlichster Art und Weise ausgebildet sein.

Eine besonders günstige Lösung sieht vor, dass die Betätigungseinrichtung eine Kulissenführung und einen durch diesen bewegbaren Kulissenfolger umfasst, der mit dem Blockierkörper gekoppelt ist.

Vorzugsweise ist dabei der Kulissenfolger durch die Kulissenführung ungefähr parallel zur Schwenkachse bewegbar.

Des Weiteren hat es sich als vorteilhaft erwiesen, wenn die Kulissenführung in einer Ebene quer zur Schwenkachse bewegbar ist.

Besonders günstig ist es, wenn die Kulissenführung durch eine Betätigungseinrichtung bewegbar ist.

Beispielsweise ist die Betätigungseinrichtung so ausgebildet, dass sie einen die Kulissenführung tragenden und relativ zum Kulissenfolger drehend bewegbaren Körper umfasst.

Insbesondere ist dabei vorgesehen, dass die Kulissenführung mindestens eine auf den Kulissenfolger einwirkende Kulissenbahn aufweist.

Besonders vorteilhaft ist es, wenn die Kulissenführung zwei auf den Kulissenfolger einwirkende und diesen zwischen sich führende Kulissenbahnen aufweist, da damit die Möglichkeit besteht, den Kulissenfolger - sofern erforderlich - stets definiert zu positionieren.

Insbesondere ist es damit möglich, dass beide Kulissenbahnen zusammen den Kulissenfolger in einer die Sicherungsstellung vorgebenden Stellung festlegen.

Ferner sieht eine vorteilhafte Lösung vor, dass eine erste Kulissenbahn einen den Kulissenfolger von der die Sicherungsstellung festlegenden Stellung in eine Bereitschaftsstellung festlegende Stellung bewegbaren Bahnabschnitt umfasst.

Des Weiteren ist es von Vorteil, wenn eine zweite Kulissenbahn einen Bahnabschnitt aufweist, welcher den Kulissenfolger von der der Bereitschaftsstellung entsprechenden Stellung in eine den Kulissenfolger in Richtung der Sicherungsstellung federelastisch beaufschlagte Stellung bewegt.

Das heißt, dass durch diesen Bahnabschnitt der Kulissenfolger federelastisch beaufschlagt wird, um - sofern dies durch die Stellung des Betätigungskörpers möglich ist - in die Sicherungsstellung überzugehen.

Ferner ist bei den beiden Kulissenbahnen vorgesehen, dass die erste Kulissenbahn durch eine Bewegung der Kulissenführung in einer ersten Drehrichtung wirksam ist und die zweite Kulissenbahn durch eine Bewegung der Kulissenführung in einer der ersten Drehrichtung entgegengesetzten Drehrichtung wirksam.

Des Weiteren ist vorzugsweise vorgesehen, dass die Betätigungseinrichtung durch eine Betätigungseinheit für die Drehblockiereinrichtung antreibbar ist, insbesondere die Betätigungseinrichtung mit der Betätigungseinheit gekoppelt ist.

Diese Lösung hat den großen Vorteil, dass dadurch die Betätigung des Blockierkörpers direkt mit der Betätigungseinheit für die Drehblockiereinrichtung gekoppelt werden kann.

Insbesondere ist dabei vorgesehen, dass die Kulissenbahn an einem drehbaren Körper eines Planetengetriebes der Betätigungseinheit für die Drehblockiereinrichtung angeordnet ist.

Insbesondere ist dabei der drehbare Körper des Planetengetriebes ein Hohlrad desselben, welches umfangsseitig die Kulissenbahn trägt.

Darüber hinaus ist vorzugsweise vorgesehen, dass die Blockiereinrichtung einen die Stellungen des Blockierkörpers erfassenden Sensor aufweist.

Dabei ist der Sensor so ausgebildet, dass er die Sicherungsstellung und die Bereitschaftstellung durch unterschiedliche Einwirkung auf diesen erfasst.

Insbesondere ist dabei der Kulissenfolger mittels eines Übertragungselements mit dem Blockierkörper gekoppelt, so dass der Blockierkörper sämtlichen Bewegungen des Kulissenfolgers folgt.

Darüber hinaus ist ferner vorzugsweise das Übertragungselement mit einem Sensorbetätigungselement gekoppelt, welches die Betätigung des Sensors ausführt.

Ein weiteres vorteilhaftes Ausführungsbeispiel der Erfindung sieht vor, dass zwischen den Arbeitsstellungsaufnahmen und den Ruhestellungsaufnahmen Blockierflächen verlaufen, gegen welche die Drehblockierkörper anlegbar sind und von welchen ausgehend sich die Arbeitsstellungsaufnahmen und die Ruhestellungsaufnahmen erstrecken, dass die Drehblockiereinheiten und die Arbeitsstellungsaufnahmen und die Ruhestellungsaufnahmen um die Schwenkachse herum derart in Winkelabständen voneinander angeordnet sind, dass in allen vorgesehenen Schwenkstellungen des Schwenklagerkörpers und des Führungskörpers relativ zueinander, ausgenommen die Arbeitsstellung und die Ruhestellung, der Drehblockierkörper mindestens einer der Drehblockiereinheiten einer der Blockierflächen gegenüberliegt und somit diese Blockierfläche, insbesondere bei einer Kraftbeaufschlagung des Betätigungskörpers, eine Bewegung des Betätigungskörpers in der Betätigungsrichtung und folglich auch ein kraftbeaufschlagtes Eingreifen der Drehblockierkörper jeder der Drehblockiereinheiten in jeweils eine der Arbeitsstellungsaufnahmen oder Ruhestellungsaufnahmen blockiert.

Der Vorteil der erfindungsgemäßen Lösung ist somit darin zu sehen, dass die Fixierung des Betätigungskörpers in der Lösestellung in einfacher und zuverlässiger Weise mittels der ohnehin vorhandenen Drehblockierkörper realisiert werden kann und dass außerdem eine signifikante Geräuschminderung beim Übergang dieser Anhängekupplung von der Lösestellung in die Drehblockierstellung der Drehblockierkörper erfolgt, da die Drehblockierkörper in einfacher Weise von den Blockierflächen in die Aufnahmen gleiten können.

Die erfindungsgemäße Lösung wird ferner bei einer Anhängekupplung der eingangs beschriebenen Art alternativ oder ergänzend zur vorstehend beschriebenen Lösung dadurch gelöst, dass die Drehblockiereinheiten zur Bildung einer Drehblockierkonfiguration in Winkelabständen um die Schwenkachse herum angeordnet sind, dass die Arbeitsstellungsaufnahmen und die Ruhestellungsaufnahmen zur Bildung jeweils einer Aufnahmenkonfiguration für die Arbeitsstellung und die Ruhestellung in denselben Winkelabständen um die Schwenkachse angeordnet sind wie die Drehblockiereinheiten, dass die Drehblockierkonfiguration und die Aufnahmenkonfiguration Arbeitsstellungsaufnahmen in der Arbeitsstellung beziehungsweise der Ruhestellungsaufnahmen in der Ruhestellung deckungsgleich zueinander stehen, so dass die Drehblockierkörper in die Arbeitsstellungsaufnahmen beziehungsweise Ruhestellungsaufnahmen eingreifen können, und dass die Winkelabstände zwischen den Drehblockiereinheiten der Drehblockierkonfiguration und die Winkelabstände zwischen den Arbeitsstellungsaufnahmen beziehungsweise Ruhestellungsaufnahmen der Aufnahmenkonfigurationen so gewählt sind, dass die Drehblockierkonfiguration und die Aufnahmenkonfigurationen nur in der Arbeitsstellung oder der Ruhestellung deckungsgleich zueinander stehen und somit nur in diesen ein Übergang des Betätigungskörpers von der Lösestellung in die Drehblockierstellung erlauben, während in den anderen Schwenkstellungen des Schwenklagerkörpers und des Führungskörpers relativ zueinander ein Übergang des Betätigungskörpers von der Lösestellung in die Drehblockierstellung nicht möglich ist.

Alternativ oder ergänzend zu den vorstehend beschriebenen erfindungsgemäßen Lösungen sieht eine weitere vorteilhafte Lösung vor, dass die Winkelabstände mindestens einer der Drehblockiereinheiten zu den in einer Umlaufrichtung um die Schwenkachse sowie zu den entgegengesetzt zu dieser Umlaufrichtung benachbart angeordneten Drehblockiereinheiten ungleich sind und dass in der Arbeitsstellung die Arbeitsstellungsaufnahmen derart angeordnet sind, dass die Drehblockierkörper jeder der Drehblockiereinheiten mit jeweils einer der Arbeitsstellungsaufnahmen in Eingriff bringbar sind, dass in der Ruhestellung die Ruhestellungsaufnahmen derart angeordnet sind, dass der Drehblockierkörper jeder der Drehblockiereinheiten mit jeweils einer der Ruhestellungsaufnahmen in Eingriff bringbar ist und dass in allen für den Betrieb vorgesehenen Schwenkstellungen des Schwenklagerkörpers und des Führungskörpers relativ zueinander, die außerhalb der Arbeitsstellung und der Ruhestellung liegen, der Drehblockierkörper mindestens einer der Drehblockiereinheiten einer zwischen den Arbeitsstellungsaufnahmen und den Ruhestellungsaufnahmen liegenden Blockierfläche gegenüber liegt und die Blockierfläche, insbesondere bei einer Kraftbeaufschlagung des Betätigungskörpers, eine Bewegung des Betätigungskörpers von der Lösestellung in die Drehblockierstellung blockiert.

Die Ungleichheit der Winkelabstände beträgt, ausgehend von gleichen Winkelabständen, beispielsweise mindestens eine Abweichung von gleichen Winkelabständen in der Größenordnung von der Hälfte des Winkelbereichs über den sich jede der Aufnahmen erstreckt, vorzugsweise bis zu dem Winkelbereich über den sich jede der Aufnahmen erstreckt.

Der Vorteil aller vorstehend genannten erfindungsgemäßen Lösungen ist darin zu sehen, dass damit eine konstruktiv einfache Lösung zur Verfügung steht, um den Betätigungskörper in der Lösestellung zu halten und nur in der Arbeitsstellung und in der Ruhestellung in die Drehblockierstellung übergehen zu lassen, wobei insbesondere vorteilhafterweise die ohnehin für die Drehblockiereinrichtung vorhandenen Drehblockierkörper eingesetzt werden können.

Im Rahmen der erfindungsgemäßen Lösung hat es sich als besonders vorteilhaft erwiesen, wenn die Zahl der Drehblockiereinheiten der Zahl der Arbeitsstellungsaufnahmen und der Zahl der Ruhestellungsaufnahmen entspricht.

Ferner ist es, um eine räumlich, insbesondere in Richtung der Schwenkachse kompakt bauende Lösung zu erhalten, von Vorteil, wenn die Drehblockierkörper aller Drehblockiereinheiten symmetrisch zu einer senkrecht zur Schwenkachse verlaufenden und diese schneidenden geometrischen Ebene ausgebildet und angeordnet sind.

Eine besonders vorteilhafte Lösung sieht vor, dass die Blockierflächen den Drehblockierkörpern der Drehblockiereinheiten zugewandt, insbesondere quer, vorzugsweise senkrecht zur Führungsrichtung, verlaufen, so dass die Drehblockierkörper beim Anliegen an diesen mit geringem oder nahezu keinem Bewegungswiderstand über die Blockierflächen bewegbar sind.

Besonders vorteilhaft ist es, wenn die Blockierflächen in einem definierten Radius um die Schwenkachse verlaufen, so dass bei der Schwenkbewegung die an diesen Blockierflächen anliegenden Drehblockierkörper keine zusätzliche radiale Bewegung zur Schwenkachse durchführen.

Ferner ist vorteilhafterweise vorgesehen, dass die Blockierflächen bis zu Öffnungsrändern der Arbeitsstellungsaufnahmen und der Ruhestellungsaufnahmen verlaufen und in diese übergehen.

Insbesondere ist vorzugsweise vorgesehen, dass die Öffnungsränder der Arbeitsstellungsaufnahmen und der Ruhestellungsaufnahmen in demselben radialen Abstand von der Schwenkachse liegen wie die Blockierflächen, so dass ein Bewegen der an den Blockierflächen anliegenden Drehblockierkörper über die Öffnungsränder hinweg in die Aufnahmen hinein ohne einen zusätzlichen Bewegungswiderstand erfolgen kann, wie er beispielsweise bei unterschiedlichen Abständen der Öffnungsränder von der Schwenkachse in Relation zum Abstand der Blockierflächen von der Schwenkachse auftreten würde.

Insbesondere hat diese Lösung auch noch den Vorteil, dass damit ein einfacher und bewegungswiderstandsfreier Übergang des Schwenklagerkörpers von der Arbeitsstellung in eine Schwenkstellung erfolgt, da auch in diesem Fall die Drehblockierkörper die Arbeitsstellungsaufnahmen und die Ruhestellungsaufnahmen im Wesentlichen ohne Bewegungswiderstand über die Öffnungsränder verlassen und sich in Richtung der Blockierflächen bewegen können.

Besonders vorteilhaft ist es, wenn mindestens einer der Drehblockierkörper der Drehblockiereinheiten bei einer relativen Schwenkbewegung zwischen Schwenklagerkörper und Führungskörper in Richtung der Arbeitsstellung, insbesondere während der von der Ruhestellung bis zur Arbeitsstellung verlaufenden Schwenkbewegung, an einer der Blockierflächen anliegt, insbesondere durch Einwirkung des Betätigungskörpers kraftbeaufschlagt anliegt, wobei die Kraftbeaufschlagung beispielsweise durch für die Lösestellung der Drehblockierkörper vorgesehene Rückzugsaufnahmen im Betätigungskörper erfolgt, die mit quer zur Führungsrichtung verlaufenden Flächen auf die Drehblockierkörper einwirken.

Insbesondere ist es günstig, wenn die Drehblockierkörper vor Erreichen der Arbeitsstellung an den Blockierflächen kraftbeaufschlagt anliegen und anschließend an Öffnungsrändern der Aufnahmen kraftbeaufschlagt anliegend in die Aufnahmen eintreten, so dass dadurch die Geräuschausprägung beim Übergang der Drehblockierkörper von der Lösestellung in die Drehblockierstellung möglichst gering gehalten werden kann, im Gegensatz zu einem Fall, in dem die Drehblockierkörper zunächst mit Spiel an den Blockierflächen anliegen, dann kraftbeaufschlagt an die Blockierflächen angelegt werden und dann von den Blockierflächen in die Arbeitsstellungsaufnahmen eintreten oder dem Fall, dass die Drehblockierkörper mit Spiel zu den Blockierflächen liegend sich in die Arbeitsstellung bewegen und in der Arbeitsstellung die Kraftbeaufschlagung erfahren, um in die Arbeitsstellungsaufnahmen einzutreten.

Hinsichtlich der Ausbildung der Arbeitsstellungsaufnahmen ist es besonders vorteilhaft, wenn sich die Arbeitsstellungsaufnahmen ausgehend von den Blockierflächen in der Führungsrichtung, insbesondere mit mindestens einer Komponente in radialer Richtung zur Schwenkachse, erstrecken, so dass die Drehblockierkörper bei der Bewegung in der Führungsrichtung keinerlei zusätzliche Umlenkung beim Eintritt in die Arbeitsstellungsaufnahmen erfahren.

Besonders vorteilhaft ist es, wenn mindestens einer der Drehblockierkörper der Drehblockiereinheiten bei einer relativen Schwenkbewegung zwischen Schwenklagerkörper und Führungskörper in Richtung der Ruhestellung, insbesondere während der von der Arbeitsstellung bis zur Ruhestellung verlaufenden Schwenkbewegung, an einer der Blockierflächen anliegt, insbesondere durch Einwirkung des Betätigungskörpers kraftbeaufschlagt anliegt, wobei die Kraftbeaufschlagung beispielsweise durch für die Lösestellung der Drehblockierkörper vorgesehene Rückzugsaufnahmen im Betätigungskörper erfolgt, die mit quer zur Führungsrichtung verlaufenden Flächen auf die Drehblockierkörper einwirken.

Insbesondere ist es günstig, wenn die Drehblockierkörper vor Erreichen der Ruhestellung an den Blockierflächen kraftbeaufschlagt anliegen und anschließend an Öffnungsrändern der Ruhestellungsaufnahmen kraftbeaufschlagt anliegend in die Ruhestellungsaufnahmen eintreten, so dass dadurch die Geräuschausprägung beim Übergang der Drehblockierkörper von der Lösestellung in die Drehblockierstellung möglichst gering gehalten werden kann, im Gegensatz zu einem Fall, in dem die Drehblockierkörper zunächst mit Spiel an den Blockierflächen anliegen, dann kraftbeaufschlagt an die Blockierflächen angelegt werden und dann von den Blockierflächen in die Ruhestellungsaufnahmen eintreten oder dem Fall, dass die Drehblockierkörper mit Spiel zu den Blockierflächen liegend sich in die Ruhestellung bewegen und in der Ruhestellung die Kraftbeaufschlagung erfahren, um in die Ruhestellungsaufnahmen einzutreten.

Hinsichtlich der Ausbildung der Ruhestellungsaufnahmen ist es besonders vorteilhaft, wenn sich die Ruhestellungsaufnahmen ausgehend von den Blockierflächen in der Führungsrichtung, insbesondere mit mindestens einer Komponente in radialer Richtung zur Schwenkachse, erstrecken, so dass die Drehblockierkörper bei der Bewegung in der Führungsrichtung keinerlei zusätzliche Umlenkung beim Eintritt in die Ruhestellungsaufnahmen erfahren.

Ferner wurden hinsichtlich der Ausrichtung der Arbeitsstellungsaufnahmen und der Ruhestellungsaufnahmen und der Blockierflächen relativ zur Führungshülse keine näheren Angaben gemacht.

So sieht eine vorteilhafte Lösung vor, dass die Arbeitsstellungsaufnahmen und der Ruhestellungsaufnahmen und die Blockierflächen der Führungshülse zugewandt angeordnet sind, so dass dadurch eine umlenkungsfreie Bewegung der Drehblockierkörper in Richtung der Blockierflächen oder in Richtung der Arbeitsstellungsaufnahmen und der Ruhestellungsaufnahmen erfolgen kann.

Generell sind der Schwenklagerkörper und der Führungskörper um die Schwenkachse relativ zueinander schwenkbar.

Eine konstruktiv besonders günstige Lösung sieht jedoch vor, dass der Führungskörper ein Teil der Schwenklagereinheit ist.

Ferner ist hinsichtlich der Ausbildung des Führungskörpers vorgesehen, dass in dem Führungskörper alle Führungsaufnahmen für die Drehblockierkörper der Drehblockiereinheiten angeordnet sind.

Darüber hinaus ist es zweckmäßig, wenn die Führungsrichtung mit mindestens einer Komponente in radialer Richtung zur Schwenkachse verläuft, so dass dadurch die Drehblockierkörper zumindest mit einer Komponente in radialer Richtung zur Schwenkachse zwischen der Drehblockierstellung und der Lösestellung bewegt werden und somit keine ausschließliche Bewegung der Drehblockierkörper in Richtung der Schwenkachse erfolgt, um diese zwischen der Drehblockierstellung und der Lösestellung zu bewegen.

Eine konstruktiv besonders günstige Lösung sieht vor, dass der Führungskörper eine Führungshülse mit Führungsaufnahmen für die Drehblockierkörper der Drehblockiereinheiten aufweist und dass insbesondere die Drehblockierkörper durch den sich in radialer Richtung an den Schwenklagerkörper anschließenden Führungskörper geführt sind.

Im Zusammenhang mit der Erläuterung der voranstehenden Ausführungsbeispiele wurde nicht näher darauf eingegangen, wie der Schwenklagerkörper an der Schwenklagereinheit schwenkbar gelagert sein soll.

Hierzu könnte beispielsweise ein dafür vorgesehenes Lager an der Schwenklagereinheit vorgesehen sein, das unabhängig vom Führungskörper ist.

Konstruktiv besonders einfach ist es jedoch, wenn der Führungskörper ein Schwenklager für den Schwenklagerkörper aufweist, das heißt entweder ein Schwenklager für den Schwenklagerkörper trägt oder selbst mit einer Außenfläche ein Schwenklager für den Schwenklagerkörper bildet.

Hinsichtlich der Bewegung der Betätigungskörper in Bezug auf den Führungskörper wurden ebenfalls keine näheren Angaben gemacht.

So sieht eine vorteilhafte Lösung vor, dass der Betätigungskörper relativ zu dem Führungskörper bewegbar geführt ist.

Dabei könnte der Betätigungskörper relativ zu dem Führungskörper in Richtung der Schwenkachse zwischen der Drehblockierstellung und der Lösestellung bewegbar sein, um die Drehblockierkörper in den entsprechenden Stellungen zu bewegen.

Eine hinsichtlich des Raumbedarfs besonders optimierte Lösung sieht vor, dass der Betätigungskörper um die Schwenkachse drehbar angeordnet ist und insbesondere sich über einen Winkelbereich um die Schwenkachse erstreckende und in Richtung parallel zur Führungsrichtung variierende Keilflächen, vorzugsweise kombiniert mit Rückzugsaufnahmen aufweist.

Darüber hinaus wurden hinsichtlich der Anordnung der Aufnahmen und der Blockierflächen ebenfalls keine näheren Angaben gemacht.

So sieht eine vorteilhafte Lösung vor, dass die Aufnahmen und die Blockierflächen an dem Schwenklagerkörper angeordnet sind.

Des Weiteren ist eine konstruktive Lösung hinsichtlich der Aufnahme der wirkenden Kräfte dann besonders günstig, wenn der Betätigungskörper von dem Führungskörper umschlossen ist und wenn insbesondere der Schwenklagerkörper den Führungskörper umgreift.

Hinsichtlich der Anordnung der Drehblockierkörper relativ zum Betätigungskörper wurden ebenfalls keine näheren Angaben gemacht.

Prinzipiell könnten die Drehblockierkörper so angeordnet sein, dass sie von dem Betätigungskörper umgriffen werden.

Für den räumlichen Aufbau der erfindungsgemäßen Anhängekupplung hat es sich ebenfalls als vorteilhaft erwiesen, wenn die Drehblockierkörper um den Betätigungskörper herum angeordnet sind.

Als konstruktiv besonders vorteilhaft hat es sich erwiesen, wenn der Schwenklagerkörper einen den Führungskörper außenliegend umschließenden Außenkörper bildet, der relativ zu der Schwenklagereinheit in Richtung der Schwenkachse unverschiebbar angeordnet ist, und wenn insbesondere der Schwenklagerkörper ein zumindest einen Teilbereich der Drehblockiereinheit außenliegend umschließenden Außenkörper bildet, der relativ zu dem Führungskörper in Richtung der Schwenkachse unverschiebbar angeordnet ist, so dass dadurch der Schwenklagerkörper beim Übergang der Drehblockierkörper von der Drehblockierstellung in die Lösestellung und umgekehrt keine Bewegung in Richtung der Schwenkachse durchführt, sondern in Richtung der Schwenkachse unverschiebbar angeordnet werden kann.

Eine derartige Anordnung des Schwenklagerkörpers hat einerseits den Vorteil eines günstigen räumlichen Aufbaus der Schwenklagereinheit selbst und den Vorteil einer relativ einfachen Abdichtung der Schwenklagereinheit, da der Schwenklagerkörper keine Bewegungen in axialer Richtung der Schwenkachse durchführt.

Vorzugsweise ist zwischen einem Gehäuse der Schwenklagereinheit und mindestens einer Endseite des Außenkörpers eine um die Schwenkachse umlaufende Dichtung vorgesehen, mit welcher eine Abdichtung gegen eindringenden Schmutz und Feuchtigkeit erfolgt.

Bei einer derartigen Lösung stellt der Schwenklagerkörper gleichzeitig den die Schwenklagereinheit schützenden und umschließenden Außenkörper dar und dadurch, dass der Außenkörper gegenüber der Schwenklagereinheit in Richtung der Schwenkachse unverschiebbar angeordnet ist, wird insbesondere erreicht, dass eine einfache Abdichtung zwischen dem Außenkörper und der Schwenklagereinheit realisierbar ist.

Konstruktiv besonders günstig ist eine Lösung, bei welcher der Schwenklagerkörper mindestens einen einen Teilbereich der Drehblockiereinrichtung außenliegend umschließenden Außenkörper bildet, der gegenüber dem Führungskörper in Richtung der Schwenkachse unverschiebbar angeordnet ist.

Insbesondere ist vorgesehen, dass die Drehblockierkörper durch den Betätigungskörper von der Lösestellung in die Drehblockierstellung bewegbar sind. Vorzugsweise ist dabei der Betätigungskörper so ausgebildet, dass er in der Lösestellung die Lösestellung der Drehblockierkörper zulässt.

Insbesondere sieht eine weitere Ausbildung des Drehblockierkörpers vor, dass dieser in der Drehblockierstellung die Drehblockierkörper in ihrer Drehblockierstellung hält.

Um sicherzustellen, dass die Drehblockierkörper stets in ihre Drehblockierstellung übergehen, insbesondere dann, wenn keine aktive Betätigung des Betätigungskörpers erfolgt, ist vorzugsweise vorgesehen, dass der Betätigungskörper durch einen elastischen Kraftspeicher in Richtung seiner Drehblockierstellung beaufschlagt ist.

Um den Betätigungskörper nun von der Drehblockierstellung in die Lösestellung bewegen zu können, ist vorzugsweise vorgesehen, dass der Betätigungskörper durch eine Betätigungseinheit von der Drehblockierstellung in die Lösestellung bewegbar ist.

Insbesondere erfolgt ein derartiges Bewegen des Betätigungskörpers durch die Betätigungseinrichtung entgegen der Beaufschlagung durch den Kraftspeicher, das heißt, dass die Betätigungseinheit der Beaufschlagung durch den Kraftspeicher entgegenwirkt und somit die vom Kraftspeicher aufgebrachten Kräfte überwinden muss.

Insbesondere bei einem drehbaren Betätigungskörper ist vorzugsweise vorgesehen, dass mit der Betätigungseinheit der Betätigungskörper entgegengesetzt zur durch den elastischen Kraftspeicher bewirkten Drehrichtung verdreht wird.

Ein derartiger elastischer Kraftspeicher kann grundsätzlich an mehreren Orten angeordnet sein.

Konstruktiv ist es besonders günstig, wenn der elastische Kraftspeicher innerhalb der Schwenklagereinheit angeordnet ist.

Eine weitere konstruktiv günstige Lösung sieht vor, dass der elastische Kraftspeicher auf einer Seite des Betätigungskörpers angeordnet ist.

In diesem Fall lässt sich der elastische Kraftspeicher vorteilhaft mit dem Betätigungselement koppeln.

Hinsichtlich der Einwirkung auf den Betätigungskörper sind die unterschiedlichsten Lösungen denkbar.

So sieht eine vorteilhafte Lösung vor, dass die Betätigungseinheit ein Abtriebselement aufweist, welches mit dem Betätigungskörper gekoppelt ist.

Prinzipiell wäre es möglich, das Abtriebselement und den Betätigungskörper starr miteinander zu koppeln.

Besonders günstig ist es jedoch, wenn das Abtriebselement und der Betätigungskörper über eine Mitnahmekopplungseinrichtung miteinander gekoppelt sind, welche abhängig von der Stellung des Abtriebselements und der Stellung des Betätigungskörpers, insbesondere der Drehstellung derselben, eine Relativbewegung um einen begrenzten Drehwinkel zulässt.

Dabei könnte die Mitnahmekopplungseinrichtung ein elastisches Verbindungsglied sein.

Besonders einfach ist es jedoch, wenn die Mitnahmekopplungseinrichtung einen mitnahmefreien Freigangzustand und einen Mitnahmezustand aufweist, das heißt, dass entweder der Freigangzustand oder der Mitnahmezustand vorliegt.

Im Zusammenhang mit den bisherigen Lösungen wurden lediglich allgemein der Antrieb der Drehblockiereinrichtung erläutert, welcher es erlaubt, einen Übergang der Drehblockiereinrichtung von mindestens einer Drehblockierstellung in eine Lösestellung und umgekehrt zu realisieren.

Ferner ist vorzugsweise vorgesehen, dass die Betätigungseinheit für die Drehblockiereinrichtung eine motorische Antriebseinheit umfasst.

Dabei könnte eine ausschließlich der Betätigungseinheit für die Drehblockiereinrichtung zugeordnete motorische Antriebseinheit vorgesehen sein.

Ferner ist vorzugsweise vorgesehen, dass das Untersetzungsgetriebe auf einer dem motorischen Antrieb zugewandten Seite des Betätigungselements der Drehblockiereinrichtung angeordnet ist.

Für den kompakten Aufbau ist es besonders förderlich, wenn in Richtung der Schwenkachse gesehen, das Untersetzungsgetriebe auf einer Seite von der motorischen Antriebseinheit angetrieben ist und auf der gegenüberliegenden Seite einen Abtrieb für das Betätigungselement aufweist.

Somit ist vorzugsweise das Untersetzungsgetriebe in Richtung der Schwenkachse gesehen zwischen der motorischen Antriebseinheit und dem Betätigungselement angeordnet.

Ferner sind vorzugsweise das Untersetzungsgetriebe, der elastische Kraftspeicher und das Betätigungselement in Richtung der Schwenkachse aufeinanderfolgend, insbesondere innerhalb der Schwenklagereinheit, angeordnet.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Anhängekupplung, umfassend einen zwischen einer Arbeitsstellung (A) und einer Ruhestellung (R) bewegbaren Kugelhals (10) der an einem ersten Ende mit einer Schwenklagereinheit (20) verbunden ist und an einem zweiten Ende eine Kupplungskugel (18) trägt, wobei mittels der Schwenklagereinheit (20), der Kugelhals (10) zur Ausführung einer Schwenkbewegung um eine Schwenkachse (22) zwischen der Arbeitsstellung (A) und der Ruhestellung (R) verschwenkbar ist, und eine zwischen einem Führungskörper (40) und einem Schwenklagerkörper (14) der Schwenklagereinheit (20) wirkende Drehblockiereinrichtung (50) mit mindestens zwei Drehblockiereinheiten (80), von denen jede einen Drehblockierkörper (54) aufweist, der mittels einer Führungsaufnahme (56) des Führungskörpers (40) in einer Führungsrichtung (58) bewegbar geführt ist und der in der Führungsrichtung (58) durch eine quer zur Führungsrichtung (58) verlaufende, an einem Betätigungskörper (52) vorgesehene Druckfläche (66) bewegbar ist, wobei durch eine Bewegung des Betätigungskörpers (52) in einer Betätigungsrichtung (72) die Drehblockierkörper (54) aller Drehblockiereinheiten (80) in der Führungsrichtung (58) bewegbar und beaufschlagbar sind und wobei die Drehblockierkörper (54) aller Drehblockiereinheiten (80) in der Arbeitsstellung (A) oder der Ruhestellung (R) durch Bewegung in der Führungsrichtung (58) in eine Drehblockierstellung bringbar sind und in dieser jeder Drehblockierkörper (54) mit jeweils einer der mindestens zwei Arbeitsstellungsaufnahmen (60) oder einer der mindestens zwei Ruhestellungsaufnahmen (60R) in Eingriff kommt, um eine Schwenkbewegung des Schwenklagerkörpers (14) und des Führungskörpers (40) relativ zueinander um die Schwenkachse (22) zu blockieren, und wobei die Drehblockierkörper (54) in eine Lösestellung bringbar sind und in dieser mit der jeweiligen Arbeitsstellungsaufnahme (60) oder der jeweiligen Ruhestellungsaufnahme (60R) außer Eingriff stehen und die Schwenkbewegung zwischen dem Schwenklagerkörper (14) und dem Führungskörper (40) freigeben, wobei in allen vorgesehenen relativen Schwenkstellungen zwischen dem Schwenklagerkörper (14) und dem Führungskörper (40), ausgenommen die Arbeitsstellung (A) und die Ruhestellung (R), eine Bewegung des Betätigungskörpers (52) in der Betätigungsrichtung (72) und folglich auch ein kraftbeaufschlagtes Eingreifen der Drehblockierkörper (54) jeder der Drehblockiereinheiten (80) in jeweils eine der Arbeitsstellungsaufnahmen (60A) oder der Ruhestellungsaufnahmen (60R) blockiert ist, dadurch gekennzeichnet, dass eine Blockiereinrichtung (270) vorgesehen ist, welche einen Blockierkörper (272) umfasst, der in eine den Betätigungskörper (52) in den Drehblockierstellungen sichernde Sicherungsstellung und eine außerhalb der Sicherungsstellung liegende Bereitschaftsstellung bewegbar ist.
2. Anhängekupplung nach Ausführungsform 1, wobei der Blockierkörper (272) an dem Führungskörper (40) der Schwenklagereinheit (20) geführt ist.
3. Anhängekupplung nach Ausführungsform 1 oder 2, wobei der Blockierkörper (272) in einer am Führungskörper (40) angeordneten Führung (274) geführt ist, dass insbesondere die Führung (274) in einem an den Betätigungskörper (52) angrenzenden Wandbereich (104) des Führungskörpers (40) angeordnet ist und dass insbesondere der Wandbereich (104) zwischen dem Betätigungskörper (52) und dem Schwenklagerkörper (14) angeordnet ist.
4. Anhängekupplung nach Ausführungsform 3, wobei der Blockierkörper (272) in der Führung (274) in Richtung ungefähr parallel zu der Schwenkachse (22) bewegbar ist.
5. Anhängekupplung nach einer der voranstehenden Ausführungsformen, wobei der Blockierkörper (272) in der jeweiligen Sicherungsstellung in eine Aufnahme (282) in dem Betätigungskörper (52) eingreift.
6. Anhängekupplung nach einer der voranstehenden Ausführungsformen, wobei der Blockierkörper (272) in der Bereitschaftsstellung angrenzend an den Betätigungskörper (52) positioniert ist.
7. Anhängekupplung nach einer der voranstehenden Ausführungsformen, wobei die Führung (274) für den Blockierkörper (272) in einem an den Betätigungskörper (52) angrenzenden Wandbereich (104) des Führungskörpers (40) angeordnet ist.
8. Anhängekupplung nach einer der Ausführungsformen 3 bis 7, wobei der Blockierkörper (272) in der Sicherungsstellung ausgehend von und geführt durch die Führung (274) jeweils mit einem Ende (276) in die jeweilige Aufnahme (282) des Betätigungskörpers (52) eingreift.
9. Anhängekupplung nach einer der voranstehenden Ausführungsformen, wobei der Blockierkörper (272) durch eine Betätigungseinrichtung (280) in der Sicherungsstellung festlegbar ist.
10. Anhängekupplung nach Ausführungsform 9, wobei die Betätigungseinrichtung (280) eine Kulissenführung (290) und einen durch diese bewegbaren Kulissenfolger (292) umfasst, der mit dem Blockierkörper (272) gekoppelt ist.
11. Anhängekupplung nach Ausführungsform 10, wobei der Kulissenfolger (292) durch die Kulissenführung (290) ungefähr parallel zur Schwenkachse (22) bewegbar ist.
12. Anhängekupplung nach Ausführungsform 10 oder 11, wobei die Kulissenführung (290) in einer Ebene quer zur Schwenkachse (22) bewegbar ist.
13. Anhängekupplung nach einer der Ausführungsformen 10 bis 12, wobei die Kulissenführung (290) durch eine Betätigungseinrichtung (280) bewegbar ist.
14. Anhängekupplung nach Ausführungsform 13, wobei die Betätigungseinrichtung (280) einen die Kulissenführung (290) tragenden und relativ zum Kulissenfolger (292) drehend bewegbaren Körper (142) umfasst.
15. Anhängekupplung nach einer der Ausführungsformen 10 bis 14, wobei die Kulissenführung (290) mindestens eine auf den Kulissenfolger (292) einwirkende Kulissenbahn (312, 314) aufweist.
16. Anhängekupplung nach einer der Ausführungsformen 10 bis 15, wobei die Kulissenführung (290) zwei auf den Kulissenfolger (292) einwirkende und diesen zwischen sich führende Kulissenbahnen (312, 314) aufweist.
17. Anhängekupplung nach Ausführungsform 16, wobei beide Kulissenbahnen (312, 314) zusammen den Kulissenfolger (292) in einer die Sicherungsstellung vorgebenden Stellung festlegen.
18. Anhängekupplung nach einer der Ausführungsformen 16 oder 17, wobei eine erste Kulissenbahn (312) einen den Kulissenfolger (292) von der die Sicherungsstellung festlegenden Stellung in eine die Bereitschaftsstellung festlegende Stellung bewegenden Bahnabschnitt (312b) umfasst.
19. Anhängekupplung nach einer der Ausführungsformen 16 bis 18, wobei eine zweite Kulissenbahn (314) einen Bahnabschnitt (314b) aufweist, welcher den Kulissenfolger (292) von der der Bereitschaftsstellung entsprechenden Stellung, in eine den Kulissenfolger (292) in Richtung der Sicherungsstellung federelastisch beaufschlagte Stellung bewegt.
20. Anhängekupplung nach einer der Ausführungsformen 16 bis 19, wobei die erste Kulissenbahn (312) durch eine Bewegung der Kulissenführung (290) in einer ersten Drehrichtung (322) wirksam ist und dass die zweite Kulissenbahn (314) durch eine Bewegung der Kulissenführung (290) in einer ersten Drehrichtung (322) entgegengesetzten Drehrichtung (324) wirksam ist.
21. Anhängekupplung nach Ausführungsform 20, wobei die Betätigungseinrichtung (280) durch eine Betätigungseinheit (180) für die Drehblockiereinrichtung (50) antreibbar ist.
22. Anhängekupplung nach Ausführungsform 21, wobei die Betätigungseinrichtung (280) mit der Betätigungseinheit (180) gekoppelt ist.
23. Anhängekupplung nach Ausführungsform 21 oder 22, wobei die Kulissenbahn (290) an einem drehbaren Körper (142) eines Planetengetriebes (130) der Betätigungseinheit (180) für die Drehblockiereinrichtung (50) angeordnet ist.
24. Anhängekupplung nach Ausführungsform 23, wobei die Kulissenbahn (290) an einem Hohlrad (142) eines Planetengetriebes (130) der Betätigungseinheit (180) angeordnet ist.
25. Anhängekupplung nach einer der voranstehenden Ausführungsformen, wobei die Blockiereinrichtung (270) einen die Stellungen des Blockierkörpers (272) erfassenden Sensor (300) aufweist.
26. Anhängekupplung nach Ausführungsform 25, wobei der Sensor (300) die Sicherungsstellung und die Bereitschaftsstellung erfasst.
27. Anhängekupplung nach einer der voranstehenden Ausführungsformen 9 bis 26, wobei der Kulissenfolger (292) mittels eines Übertragungselements (294) mit dem Blockierkörper (272) gekoppelt ist.
28. Anhängekupplung nach Ausführungsform 27, wobei das Übertragungselement (294) mit einem Sensorbetätigungselement (296) gekoppelt ist.
29. Anhängekupplung nach einer der voranstehenden Ausführungsformen, wobei zwischen den Arbeitsstellungsaufnahmen (60A) und den Ruhestellungsaufnahmen (60R) Blockierflächen (90) verlaufen, gegen welche die Drehblockierkörper (54) anlegbar sind und von welchen ausgehend sich die Arbeitsstellungsaufnahmen (60A) und die Ruhestellungsaufnahmen (60R) erstrecken, dass die Drehblockiereinheiten (80) und die Arbeitsstellungsaufnahmen (60A) sowie die Ruhestellungsaufnahmen (60R) um die Schwenkachse (22) herum derart in Winkelabständen (W) voneinander angeordnet sind, dass in allen vorgesehenen Schwenkstellungen des Schwenklagerkörpers (14) und des Führungskörpers (40) relativ zueinander, ausgenommen die Arbeitsstellung (A) und die Ruhestellung (R), der Drehblockierkörper (54) mindestens einer der Drehblockiereinheiten (80) einer der Blockierflächen (90) gegenüberliegt und somit diese Blockierflächen (90), insbesondere bei einer Kraftbeaufschlagung des Betätigungskörpers (52) in Richtung der Betätigungsrichtung (72), eine Bewegung des Betätigungskörpers (52) in der Betätigungsrichtung (72) und folglich auch ein kraftbeaufschlagtes Eingreifen der Drehblockierkörper (54) jeder der Drehblockiereinheiten (80) in eine der Arbeitsstellungsaufnahmen (60A) oder der Ruhestellungsaufnahmen (60R) blockiert.
30. Anhängekupplung nach einer der voranstehenden Ausführungsformen, wobei die Drehblockiereinheiten (80) zur Bildung einer Drehblockierkonfiguration in Winkelabständen (W) um die Schwenkachse (22) herum angeordnet sind, dass die Arbeitsstellungsaufnahmen (60A) und die Ruhestellungsaufnahmen (60R) zur Bildung jeweils einer Aufnahmenkonfiguration für die Arbeitsstellung (A) und die Ruhestellung (R) in denselben Winkelabständen (W) um die Schwenkachse (22) angeordnet sind wie die Drehblockiereinheiten (80), dass die Drehblockierkonfiguration und die Aufnahmenkonfiguration der Arbeitsstellungsaufnahme (60A) in der Arbeitsstellung (A) beziehungsweise der Ruhestellungsaufnahmen (60R) in der Ruhestellung (R) deckungsgleich zueinander stehen, so dass die Drehblockierkörper (54) in die Arbeitsstellungsaufnahmen beziehungsweise Ruhestellungsaufnahmen eingreifen können, und dass die Winkelabstände (W) zwischen den Drehblockiereinheiten (80) der Drehblockierkonfiguration und die Winkelabstände zwischen den Arbeitsstellungsaufnahmen (60) beziehungsweise den Ruhestellungsaufnahmen (60R) der Aufnahmenkonfigurationen so gewählt sind, dass die Drehblockierkonfiguration und eine der Aufnahmenkonfigurationen nur in der Arbeitsstellung (A) oder der Ruhestellung (R) deckungsgleich zueinander stehen.
31. Anhängekupplung nach einer der voranstehenden Ausführungsformen, wobei die Winkelabstände (W) mindestens einer der Drehblockiereinheiten (80) zu den in einer Umlaufrichtung um die Schwenkachse (22) sowie zu den entgegengesetzt zu dieser Umlaufrichtung benachbart angeordneten Drehblockiereinheiten (80) ungleich sind, dass in der Arbeitsstellung (A) die Arbeitsstellungsaufnahmen (60A) derart angeordnet sind, dass der Drehblockierkörper (54) jeder der Drehblockiereinheiten (80) mit jeweils einer der Arbeitsstellungsaufnahmen (60A) in Eingriff bringbar ist, dass in der Ruhestellung (R) die Ruhestellungsaufnahmen (60R) derart angeordnet sind, dass der Drehblockierkörper (54) jeder der Drehblockiereinheiten (80) mit jeweils einer der Ruhestellungsaufnahmen (60R) in Eingriff bringbar ist, und dass in allen für den Betrieb vorgesehenen Schwenkstellungen des Schwenklagenkörpers (14) und des Führungskörpers (40) relativ zueinander, die außerhalb der Arbeitsstellung (A) oder der Ruhestellung (R) liegen, der Drehblockierkörper (54) mindestens einer der Drehblockiereinheiten (80) einer zwischen den Arbeitsstellungsaufnahmen (60A) und den Ruhestellungsaufnahmen (60R) verlaufenden Blockierfläche (90) gegenüberliegt, und die Blockierfläche (90), insbesondere bei einer Kraftbeaufschlagung des Betätigungskörpers (52), eine Bewegung des Betätigungskörpers (52) von der Lösestellung in die Drehblockierstellung blockiert.
32. Anhängekupplung nach einer der voranstehenden Ausführungsformen, wobei die Blockierflächen (90) den Drehblockierkörpern (54) der Drehblockiereinheiten (80) zugewandt verlaufen.
33. Anhängekupplung nach einer der voranstehenden Ausführungsformen, wobei die Blockierflächen (90) in einem definierten Radius um die Schwenkachse (22) verlaufen.
34. Anhängekupplung nach einer der voranstehenden Ausführungsformen, wobei die Blockierflächen (90) bis zu Öffnungsrändern (92) der Arbeitsstellungsaufnahmen (60A) und der Ruhestellungsaufnahme (60R) verlaufen und in diese übergehen.
35. Anhängekupplung nach Ausführungsform 34, wobei die Öffnungsränder (92) der Arbeitsstellungsaufnahmen (60A) und der Ruhestellungsaufnahme (60R) in demselben radialen Abstand von der Schwenkachse (22) liegen wie die Blockierflächen (90).
36. Anhängekupplung nach einer der voranstehenden Ausführungsformen, wobei mindestens einer der Drehblockierkörper (54) der Drehblockiereinheiten (80) bei einer relativen Schwenkbewegung zwischen Schwenklagerkörper (14) und Führungskörper (40) in Richtung der Arbeitsstellung (A) an einer der Blockierflächen (90) anliegt, insbesondere durch die Einwirkung des Betätigungskörpers (52), kraftbeaufschlagt anliegt.
37. Anhängekupplung nach einer der voranstehenden Ausführungsformen, wobei die Drehblockierkörper (54) vor Erreichen der Arbeitsstellung (A) an den Blockierflächen (90) kraftbeaufschlagt anliegen und anschließend an Öffnungsrändern (92) der Arbeitsstellungsaufnahmen (60A) kraftbeaufschlagt anliegend in die Arbeitsstellungsaufnahmen (60A) eintreten.
38. Anhängekupplung nach einer der voranstehenden Ausführungsformen, wobei sich die Arbeitsstellungsaufnahmen (60A) ausgehend von den Blockierflächen (90) in der Führungsrichtung (58), insbesondere mit mindestens einer Komponente in radialer Richtung zur Schwenkachse (22), erstrecken.
39. Anhängekupplung nach einer der voranstehenden Ausführungsformen, wobei mindestens einer der Drehblockierkörper (54) der Drehblockiereinheiten (80) bei einer relativen Schwenkbewegung zwischen Schwenklagerkörper (14) und Führungskörper (40) in Richtung der Ruhestellung (R) an einer der Blockierflächen (90) anliegt, insbesondere durch die Einwirkung des Betätigungskörpers (52), kraftbeaufschlagt anliegt.
40. Anhängekupplung nach einer der voranstehenden Ausführungsformen, wobei die Drehblockierkörper (54) vor Erreichen der Ruhestellung (R) an den Blockierflächen (90) kraftbeaufschlagt anliegen und anschließend an Öffnungsrändern (92) der Ruhestellungsaufahmen (60R) kraftbeaufschlagt anliegend in die Ruhestellungsaufnahmen (60R) eintreten.
41. Anhängekupplung nach einer der voranstehenden Ausführungsformen, wobei sich die Ruhestellungsaufnahmen (60R) ausgehend von den Blockierflächen (90) in der Führungsrichtung (58), insbesondere mit mindestens einer Komponente in radialer Richtung zur Schwenkachse (22), erstrecken.
42. Anhängekupplung nach einer der voranstehenden Ausführungsformen, wobei die Arbeitsstellungsaufnahmen (60A), die Ruhestellungsaufnahmen (60R) und die Blockierflächen (90) der Führungshülse (40) zugewandt angeordnet sind.
43. Anhängekupplung nach einer der voranstehenden Ausführungsformen, wobei der Führungskörper (40) ein Teil der Schwenklagereinheit (20) ist.
44. Anhängekupplung nach einer der voranstehenden Ausführungsformen, wobei in dem Führungskörper (40) alle Führungsaufnahmen (56) für die Drehblockierkörper (54) der Drehblockiereinheiten (80) angeordnet sind.
45. Anhängekupplung nach einer der voranstehenden Ausführungsformen, wobei die Führungsrichtung (58) mit mindestens einer Komponente in radialer Richtung zur Schwenkachse (22) verläuft.
46. Anhängekupplung nach einer der voranstehenden Ausführungsformen, wobei der Führungskörper (40) eine Führungshülse (44) mit Führungsaufnahmen (56) für die Drehblockierkörper (54) der Drehblockiereinheiten (80) aufweist und dass insbesondere die Drehblockierkörper (54) durch den sich in radialer Richtung an den Schwenklagerkörper (14) anschließenden Führungskörper (40) geführt sind.
47. Anhängekupplung nach einer der voranstehenden Ausführungsformen, wobei der Führungskörper (40) ein Schwenklager für den Schwenklagerkörper (14) aufweist.
48. Anhängekupplung nach einer der voranstehenden Ausführungsformen, wobei der Betätigungskörper (52) relativ zu dem Führungskörper (40) bewegbar geführt ist.
49. Anhängekupplung nach einer der voranstehenden Ausführungsformen, wobei der Betätigungskörper (52) um die Schwenkachse (22) drehbar angeordnet ist und insbesondere sich über einen Winkelbereich um die Schwenkachse (22) erstreckende und in Richtung parallel zur Führungsrichtung (58) variierende Keilflächen (66) vorzugsweise kombiniert mit Rückzugsaufnahmen (62) aufweist.
50. Anhängekupplung nach einer der voranstehenden Ausführungsformen, wobei die Aufnahmen (60) und die Blockierflächen (90) an dem Schwenklagerkörper (14) angeordnet sind.
51. Anhängekupplung nach einer der voranstehenden Ausführungsformen, wobei der Betätigungskörper (52) von dem Führungskörper (40) umschlossen ist und dass insbesondere der Schwenklagerkörper (14) den Führungskörper (40) umgreift.
52. Anhängekupplung nach einer der voranstehenden Ausführungsformen, wobei die Drehblockierkörper (54) um den Betätigungskörper (52) herum angeordnet sind.
53. Anhängekupplung nach einer der voranstehenden Ausführungsformen, wobei der Schwenklagerkörper (14) einen den Führungskörper (40) außenliegend umschließenden Außenkörper bildet, der relativ zu der Schwenklagereinheit (20) in Richtung der Schwenkachse (22) unverschiebbar angeordnet ist, und dass insbesondere der Schwenklagerkörper (14) einen zumindest einen Teilbereich der Drehblockiereinheit (50) außenliegend umschließenden Außenkörper bildet, der relativ zu dem Führungskörper (40) in Richtung der Schwenkachse (22) unverschiebbar angeordnet ist.
54. Anhängekupplung nach einer der voranstehenden Ausführungsformen, wobei der Betätigungskörper (52) durch einen elastischen Kraftspeicher (114) in Richtung seiner Drehblockierstellung beaufschlagt ist.
55. Anhängekupplung nach einer der voranstehenden Ausführungsformen, wobei der Betätigungskörper (52) durch eine Betätigungseinheit (180) von der Drehblockierstellung in die Lösestellung bewegbar ist.
56. Anhängekupplung nach Ausführungsform 54 oder 55, wobei der Betätigungskörper (52) durch die Betätigungseinheit (180) entgegen der Beaufschlagung durch den Kraftspeicher (114) bewegbar ist.
57. Anhängekupplung nach einer der Ausführungsformen 54 bis 56, wobei mit der Betätigungseinheit (180) der Betätigungskörper (52) entgegengesetzt zur durch den elastischen Kraftspeicher (114) bewirkten Betätigungsrichtung (72) verdrehbar ist.
58. Anhängekupplung nach einer der voranstehenden Ausführungsformen, wobei die Betätigungseinheit (180) ein Abtriebselement (142) aufweist, welches mit dem Betätigungskörper (52) gekoppelt ist.
59. Anhängekupplung nach Ausführungsform 58, wobei das Abtriebselement (142) und der Betätigungskörper (52) über eine Mitnahmekopplungseinrichtung (156, 158) miteinander gekoppelt sind.
60. Anhängekupplung nach Ausführungsform 59, wobei die Mitnahmekopplungseinrichtung (156, 158) einen mitnahmefreien Freigangzustand und einen Mitnahmezustand aufweist.

Weitere Merkmale und Vorteile der erfindungsgemäßen Lösung sind Gegenstand der nachfolgenden Beschreibung sowie der zeichnerischen Darstellung eines Ausführungsbeispiels.

In der Zeichnung zeigen:
- Fig. 1: eine Rückansicht eines Kraftfahrzeugs mit einer erfindungsgemäßen Anhängekupplung;
- Fig. 2: eine Draufsicht auf ein erstes Ausführungsbeispiel einer erfindungsgemäßen Anhängekupplung mit Blick in Fahrtrichtung auf die an einem Fahrzeugheck montierte Anhängekupplung, wobei die Anhängekupplung in ihrer Arbeitsstellung steht;
- Fig. 3: eine Draufsicht auf die Anhängekupplung in Fig. 2 in Richtung der Schwenkachse;
- Fig. 4: eine Ansicht entsprechend Fig. 2 der in der Ruhestellung stehenden Anhängekupplung;
- Fig. 5: eine Draufsicht auf die Anhängekupplung gemäß die in der Ruhestellung stehende Anhängekupplung gemäß Fig. 4 in Richtung der Schwenkachse;
- Fig. 6: eine Darstellung eines Schnitts längs Linie 6-6 in Fig. 3;
- Fig. 7: einen Schnitt längs Linie 7-7 in Fig. 6 in der Arbeitsstellung bei Drehblockierung durch in einer Drehblockierstellung stehende Drehblockierkörper;
- Fig. 8: eine Darstellung eines Schnitts ähnlich Fig. 7 in der Losestellung mit in eine Lösestellung verdrehtem Betätigungskörper und in Lösestellung stehenden Drehblockierkörpern;
- Fig. 9: eine Darstellung ähnlich Fig. 8 bei geringfügigem Schwenken des Schwenklagerkörpers aus der Arbeitsstellung heraus, mit unter Einwirkung der Drehfeder stehendem blockiertem Betätigungskörper;
- Fig. 10: eine Darstellung ähnlich Fig. 8 mit in Richtung der Ruhestellung weitergedrehtem Schwenklagerkörper, jedoch in der Lösestellung;
- Fig. 11: eine Darstellung ähnlich Fig. 10 mit in Richtung der Ruhestellung weitergedrehtem Schwenklagerkörper;
- Fig. 12: eine Darstellung ähnlich Fig. 11 mit in Richtung der Ruhestellung weitergedrehtem Schwenklagerkörper;
- Fig. 13: eine Darstellung ähnlich Fig. 7 in der Ruhestellung;
- Fig. 14: eine Darstellung ähnlich Fig. 8 in der Ruhestellung;
- Fig. 15: einen Schnitt längs Linie 15-15 in Fig. 6 ohne Tragplatte und Haltering;
- Fig. 16: eine perspektivische Darstellung eines Hohlrads und einer mit diesem zusammenwirkenden Antriebshülse;
- Fig. 17: eine perspektivische Explosionsdarstellung des Schwenklagerkörpers mit der Abdeckung;
- Fig. 18: einen vergrößerten Schnitt gemäß Fig. 6 in der Arbeitsstellung;
- Fig. 19: einen vergrößerten Schnitt ähnlich Fig. 18 in der Ruhestellung bei in der Lösestellung stehendem Blockierkörper ohne Verriegelungs- oder Sicherungsfunktion;
- Fig. 20: in der Ausgangsstellung;
Fig. 20a eine perspektivische Darstellung des Zusammenwirkens des Hohlrades in der Stellung gemäß Fig. 20b mit einer Blockiereinrichtung und mit der Drehblockiereinrichtung;
Fig. 20b eine Draufsicht auf das Hohlrad des Planetengetriebes von Seiten der Antriebshülse;
Fig. 20c eine perspektivische Darstellung der Betätigung des Sensors;
- Fig. 21: in der ersten gegenüber der Ausgangsstellung gedrehten Stellung des Hohlrads zum Lösen der Blockiereinrichtung und ohne Einwirkung auf die Drehblockiereinrichtung;
Fig. 21a eine perspektivische Darstellung des Zusammenwirkens des Hohlrades in der Stellung gemäß Fig. 21b mit der Blockiereinrichtung und mit der Drehblockiereinrichtung;
Fig. 21b eine Draufsicht auf das Hohlrad des Planetengetriebes von Seiten der Antriebshülse;
Fig. 21c eine perspektivische Darstellung der Betätigung des Sensors;
- Fig. 22: in einer gegenüber der Ausgangsstellung gedrehten Stellung des Hohlrades bei Erreichen der Lösestellung der Drehblockierrichtung;
Fig. 22a eine perspektivische Darstellung des Zusammenwirkens des Hohlrades in der Stellung gemäß Fig. 22b mit einer Sicherungseinrichtung und mit der Drehblockiereinrichtung;
Fig. 22b eine Draufsicht auf das Hohlrad des Planetengetriebes von Seiten der Antriebshülse;
Fig. 22c eine perspektivische Darstellung der Betätigung des Sensors;
- Fig. 23: in einer gegenüber der Stellung in Fig. 22 in Richtung der Ausgangsstellung zurück gedrehten Stellung des Hohlrades bei Erreichen der Ruhestellung des Schwenklagerkörpers;
Fig. 23a eine perspektivische Darstellung des Zusammenwirkens des Hohlrades in der Stellung gemäß Fig. 23b mit einer Sicherungseinrichtung und mit der Drehblockiereinrichtung;
Fig. 23b eine Draufsicht auf das Hohlrad des Planetengetriebes von Seiten der Antriebshülse;
Fig. 23c eine perspektivische Darstellung der Betätigung des Sensors;
- Fig. 24: in einer in die Ausgangsstellung gedrehten Stellung des Hohlrads;
Fig. 24a eine perspektivische Darstellung des Zusammenwirkens des Hohlrades in der Stellung gemäß Fig. 24b mit einer Sicherungseinrichtung und mit der Drehblockiereinrichtung;
Fig. 24b eine Draufsicht auf das Hohlrad des Planetengetriebes von Seiten der Antriebshülse;
Fig. 24c eine perspektivische Darstellung der Betätigung des Sensors;
- Fig. 25: in einer in die der Ausgangsstellung gemäß Fig. 20 gedrehten Stellung des Hohlrads bei einem Übergang der Drehblockiereinrichtung in die Drehblockierstellung und der Blockiereinrichtung in die Sicherungsstellung;
Fig. 25a eine perspektivische Darstellung des Zusammenwirkens des Hohlrades in der Stellung gemäß Fig. 25b mit einer Sicherungseinrichtung und mit der Drehblockiereinrichtung;
Fig. 25b eine Draufsicht auf das Hohlrad des Planetengetriebes von Seiten der Antriebshülse;
Fig. 25c eine perspektivische Darstellung der Betätigung des Sensors.

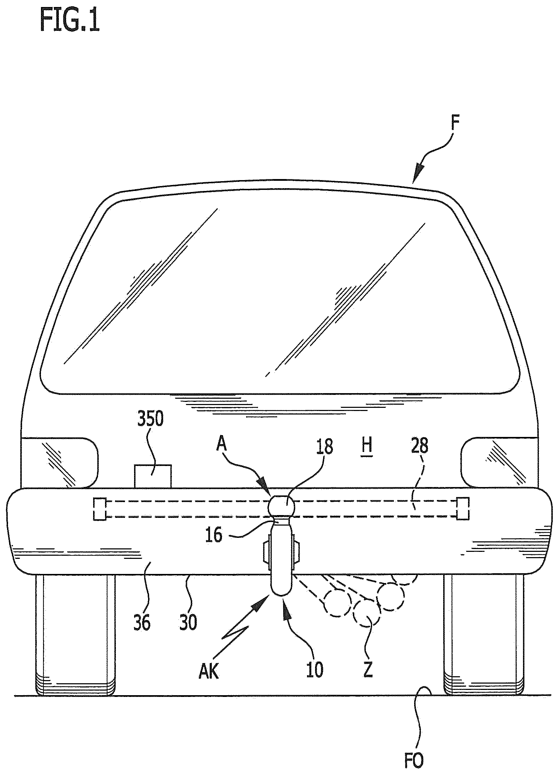

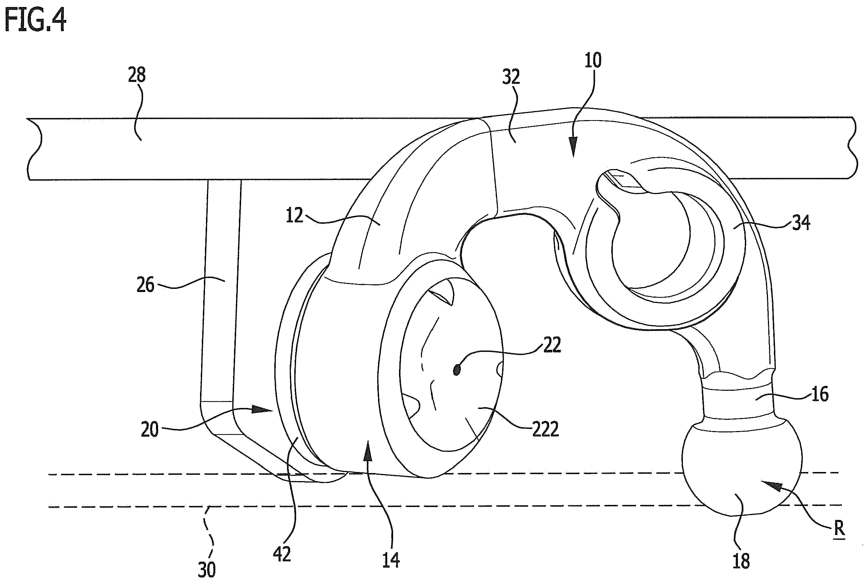

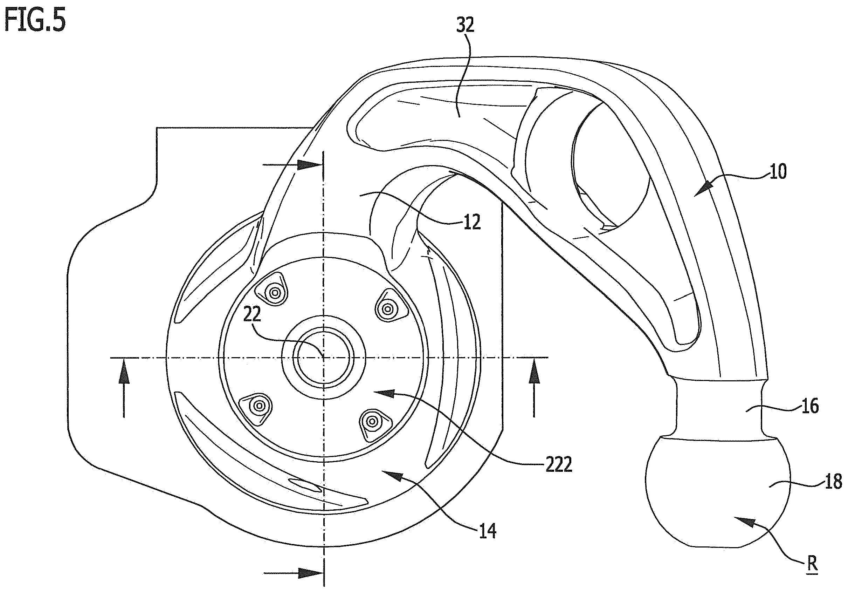

Ein erstes Ausführungsbeispiel einer erfindungsgemäßen Anhängekupplung AK für ein Kraftfahrzeug, dargestellt in Fig. 1, 2 und 3 in einer Arbeitsstellung A und in Fig. 4 und 5 in einer Ruhestellung R, umfasst einen als Ganzes mit 10 bezeichneten Kugelhals, welcher mit einem ersten Ende 12 an einer Schwenklagereinheit 20 gehalten ist und an einem zweiten Ende 16 eine als Ganzes mit 18 bezeichnete Kupplungskugel trägt, an welcher eine Kupplungskugelaufnahme eines Anhängers fixierbar ist.

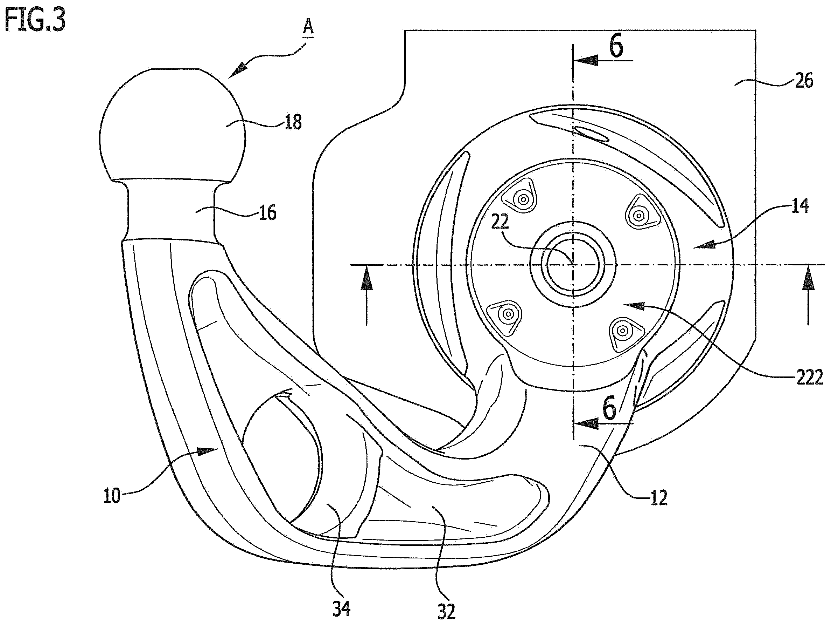

Der Kugelhals 10 ist durch eine als Ganzes mit 20 bezeichnete Schwenklagereinheit um eine Schwenkachse 22 relativ zu einem fahrzeugfesten Träger 24 schwenkbar gelagert, wobei der Träger 24 vorzugsweise eine die Schwenklagereinheit 20 haltende Tragplatte 26 aufweist, welche sich vorzugsweise in einer zur Schwenkachse 22 senkrechten Ebene erstreckt, und einen fahrzeugfesten Querträger 28 aufweist, welcher in bekannter Weise an einem Heckbereich H einer Fahrzeugkarosserie F befestigbar ist, und zwar so, dass die Schwenklagereinheit 20 und der Träger 24 auf einer Fahrbahnoberfläche FO abgewandten Seite einer Unterkante 30 einer Stoßfängereinheit 36 liegen, und durch die Stoßfängereinheit 36 abgedeckt sind (Fig. 3).

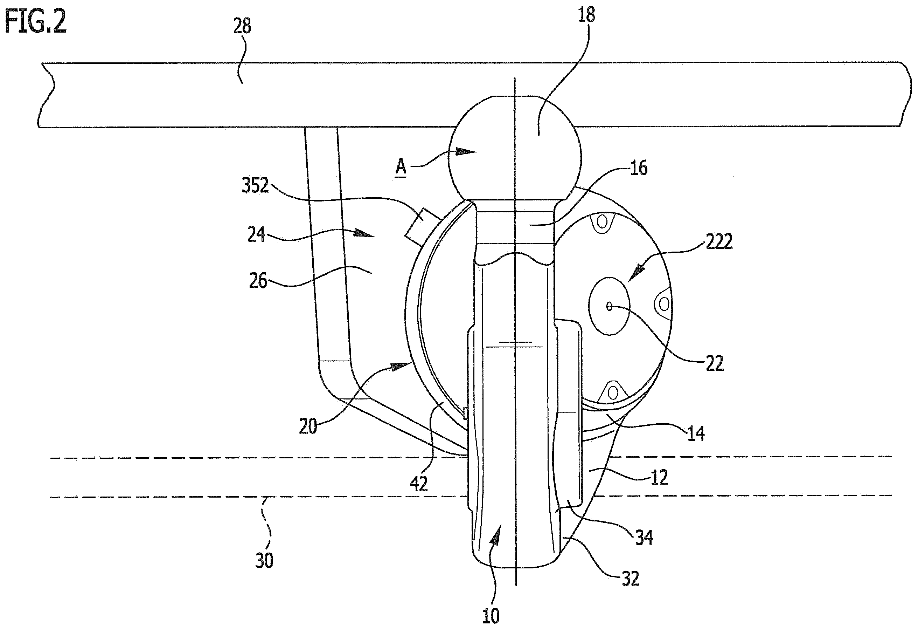

In der in Fig. 1 und 2 dargestellten Arbeitsstellung untergreift der Kugelhals 10 mit einem sich an das erste Ende 12 anschließenden Abschnitt 32 die Unterkante 30 der Stoßfängereinheit 36, so dass das zweite Ende 16 und die Kupplungskugel 18 mitsamt einer Steckdosenaufnahme 34 auf einer der Fahrzeugkarosserie F abgewandten Seite der hinteren Stoßfängereinheit 36 stehen, während in der Ruhestellung sowohl die Schwenklagereinheit 20 als auch der gesamte Kugelhals 10 mitsamt der Kupplungskugel 18 von der hinteren Stoßfängereinheit 36 gegen Sicht von hinten abgedeckt sind.

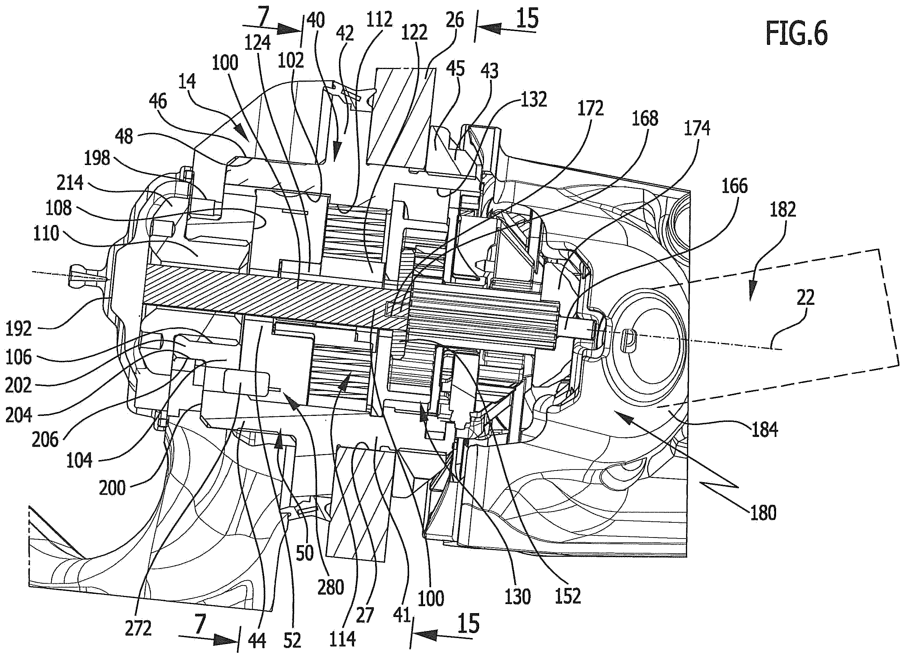

Die Schwenklagereinheit 20 umfasst, wie in Fig. 6 bis 9 dargestellt, einerseits einen Schwenklagerkörper 14 und andererseits einen Führungskörper 40.

Beispielsweise ist der Führungskörper 40 mit einem Flansch 42 fest mit der Tragplatte 26 verbunden ist und eine sich ausgehend von dem Flansch 42 von der Tragplatte 26 weg erstreckende Führungshülse 44, an welcher der Schwenklagerkörper 14 um die Schwenkachse 20 drehbar gelagert ist, wobei an diesen der Kugelhals 10 gehalten ist.

Alternativ dazu ist es aber auch denkbar, den Schwenklagerkörper 14 fest mit dem Flansch 42 zu verbinden und an dem Führungskörper 40 den Kugelhals 10 anzuordnen.

Die Führungshülse 44 umfasst eine zylindrische Außenmantelfläche 46, an welcher der Schwenklagerkörper 14 mit einer zylindrischen Innenfläche 48 anliegt um dadurch um die Schwenkachse 22 eine Drehführung zu erhalten, so dass der Schwenklagerkörper 14 und der Führungskörper 40 relativ zueinander drehbar sind und somit der Kugelhals 10 von der Arbeitsstellung A in die Ruhestellung R und umgekehrt verschwenkbar ist.

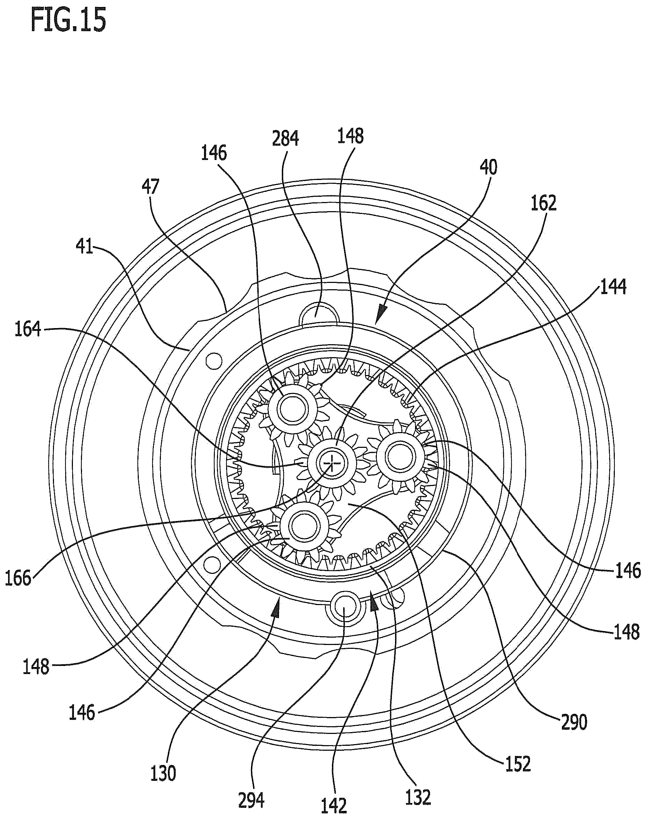

Der Führungskörper 40 umfasst im Falle seiner feststehenden Montage einen sich durch einen Durchbruch 27 in der Tragplatte 26 erstreckenden Fortsatz 41, der eine auf einer dem Flansch 42 gegenüberliegenden Seite auf den Fortsatz 41 folgende Aufnahme 43 für einen an dieser fixierbaren Haltering 45 trägt, so dass der Führungskörper 40 durch den Fortsatz 41 aufgrund seiner nicht rotationssymmetrischen sondern mit einer radial variierenden Außenkontur 47 (Fig. 15) in dem entsprechend geformten Durchbruch 27 durch Formschluss drehfest in der Tragplatte 26 sitzt und durch den Flansch 45 sowie den Haltering 43, die auf gegenüberliegenden Seiten der Tragplatte 26 anliegen, an dieser fixiert ist.

Der Führungskörper 40 bildet somit durch seine feste Verbindung mit der Tragplatte 26 und dem Träger 24 die fahrzeugfeste Drehlagerung für den Schwenklagerkörper 14.

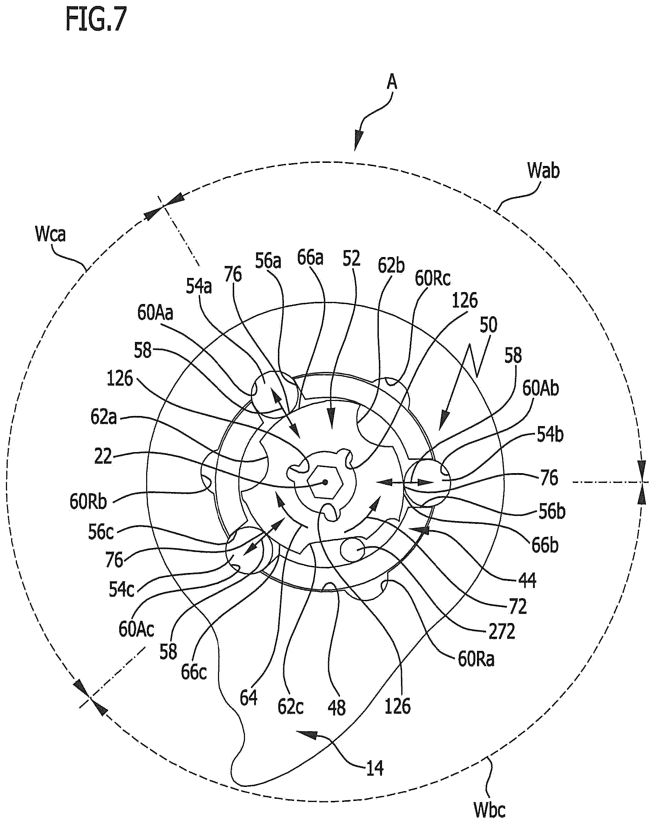

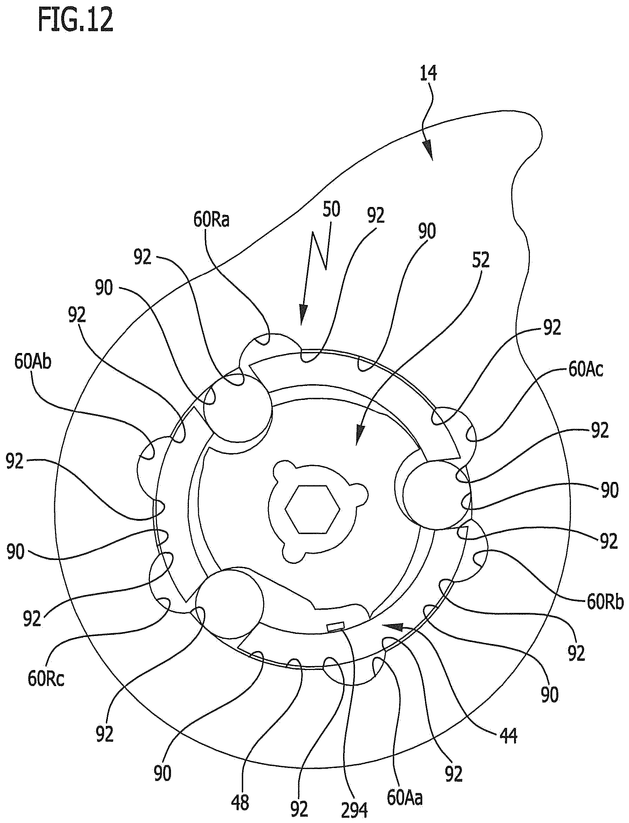

Zur Fixierung des Schwenklagerkörpers 14 in der Arbeitsstellung A ist die Schwenklagereinheit 20 mit einer als Ganzes mit 50 bezeichneten Drehblockiereinrichtung (Fig. 7 bis 14) versehen, welche einen Betätigungskörper 52, mehrere durch den Betätigungskörper 52 beaufschlagbare Drehblockierkörper 54, von denen jeder in einer Führungsaufnahme 56 der Führungshülse 44 in einer im Wesentlichen radial zur Schwenkachse 22 verlaufenden Führungsrichtung 58 bewegbar geführt sind.

Vorzugsweise sind zumindest die Drehblockierkörper 54 und die Führungsaufnahmen 56 symmetrisch zu einer senkrecht zur Schwenkachse 22 verlaufenden und die Drehblockierkörper 54 schneidenden geometrischen Ebene angeordnet, die in den Fig. 7 bis 14 der Zeichenebene entspricht.

Ferner umfasst die Drehblockiereinrichtung 50 sich ausgehend von der Innenfläche 48 des Schwenklagerkörpers 14 insbesondere in radialer Richtung zur Schwenkachse 22 in diesen hineinerstreckende Arbeitsstellungsaufnahmen 60A, mit denen die Drehblockierkörper 54 in der Arbeitsstellung A in Eingriff bringbar sind, wobei die Arbeitsstellungsaufnahmen 60A in radialer Richtung zur Schwenkachse 22 zunehmend einen geringeren Abstand voneinander aufweisende Wandflächen haben. Außerdem umfasst die Drehblockiereinrichtung 50 zusätzlich zu den Arbeitsstellungsaufnahmen 60A Ruhestellungsaufnahmen 60R, die im einfachsten Fall in gleicher Weise wie die Arbeitsstellungsaufnahmen 60A ausgebildet sind.

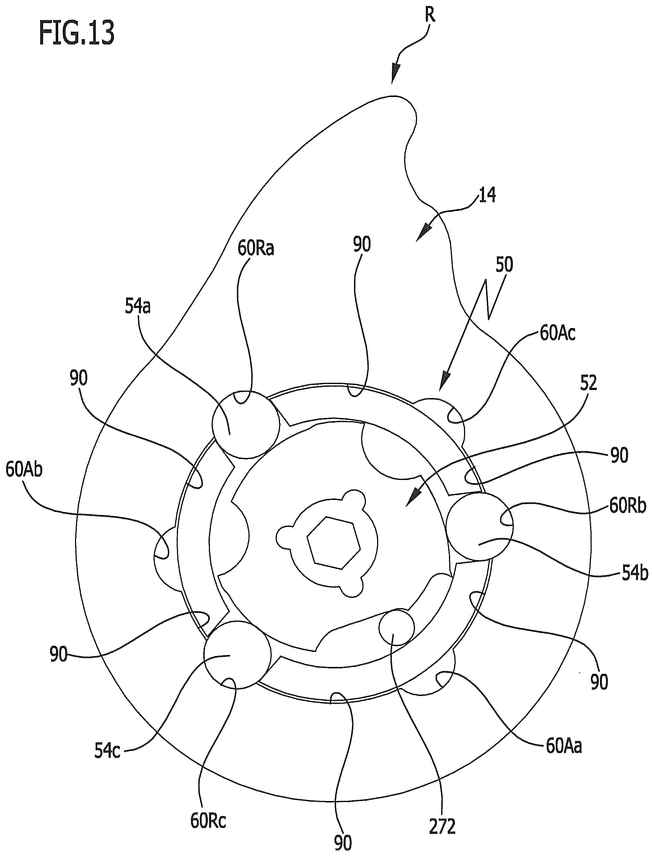

Umfasst beispielsweise die Drehblockiereinrichtung 50, wie im Zusammenhang mit Fig. 7 bis Fig. 14 beim ersten Ausführungsbeispiel dargestellt, einen Satz von drei Drehblockierkörpern 54a, 54b und 54c, so weist die Führungshülse 44 einen entsprechenden Satz von drei Führungsaufnahmen 56a, 56b und 56c auf, in welchen die Drehblockierkörper 54a, 54b und 54c in der im Wesentlichen radial zur Schwenkachse 22 verlaufenden Führungsrichtung 58 verschiebbar geführt sind, und der Schwenklagerkörper 14 ist mit einem Satz von Arbeitsstellungsaufnahmen 60Aa, 60Ab und 60Ac versehen, mit welchen die Drehblockierkörper 54a, 54b und 54c in der Arbeitsstellung A in Eingriff bringbar sind (Fig. 7), und mit einem Satz von Ruhestellungsaufnahmen 60Ra, 60Rb, 60Rc versehen, mit welchem die Drehblockierkörper 52 in der Ruhestellung R in Eingriff bringbar sind (Fig. 13).

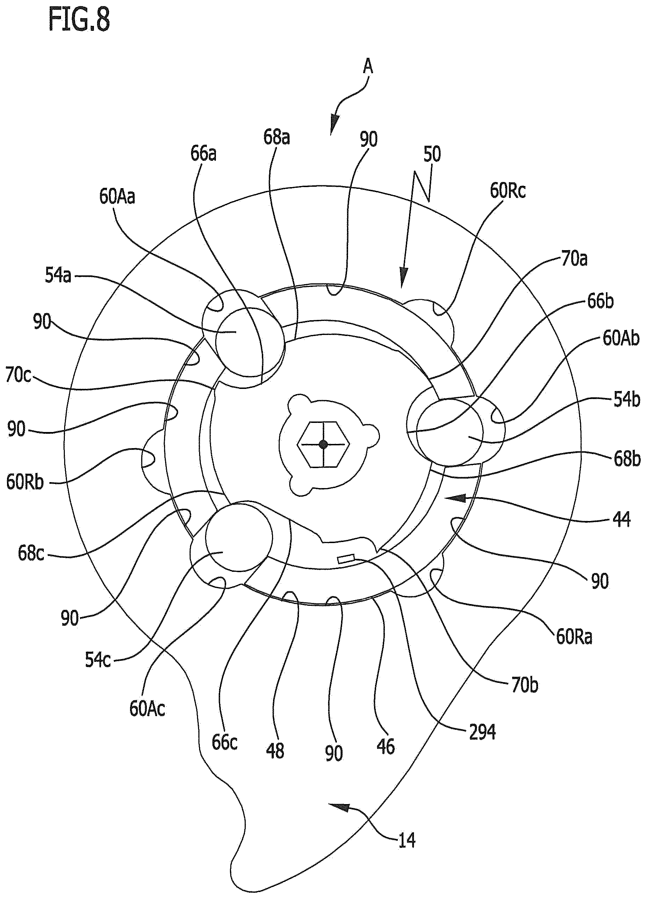

Zum geeigneten Bewegen und Positionieren der Drehblockierkörper 54 in der Führungsrichtung 58 ist der Betätigungskörper 52 mit einem der Zahl der Drehblockierkörper 54 entsprechenden Satz von beispielsweise insgesamt drei, Rückzugsaufnahmen 62a, 62b und 62c und sich in einer Umlaufrichtung 64 an die jeweiligen Rückzugsaufnahmen 62a, 62b, 62c anschließenden Druckflächen 66a, 66b und 66c, die als radial zur Schwenkachse 22 wirkende Keilflächen ausgebildet sind, versehen, wobei die Drehblockierkörper 54 in ihrer Lösestellung in die Rückzugsaufnahmen 62a, 62b, 62c soweit eintauchen können (Fig. 8), dass sie nicht mehr über die Außenmantelfläche 46 der Führungshülse 44 überstehen, und wobei sich die Druckflächen 66a, 66b, 66c jeweils von einem sich unmittelbar an die jeweilige Rückzugsaufnahmen 62 anschließenden radial innenliegenden Anfangsbereich 68a, 68b und 68c mit zunehmender Erstreckung in der Umlaufrichtung 64 zunehmend radial zur Schwenkachse 22 nach außen erstrecken, bis zu jeweils einem radial außenliegenden Endbereich 70a, 70b und 70c und somit bei einer Drehbewegung des Betätigungskörpers 52 als Keilflächen auf die Drehblockierkörper 54 wirken, um diese in ihre Drehblockierstellung zu bewegen.

Vorzugsweise verlaufen dabei die Druckflächen 66 als Spiral- oder Evolventensegmente relativ zur Schwenkachse 22.

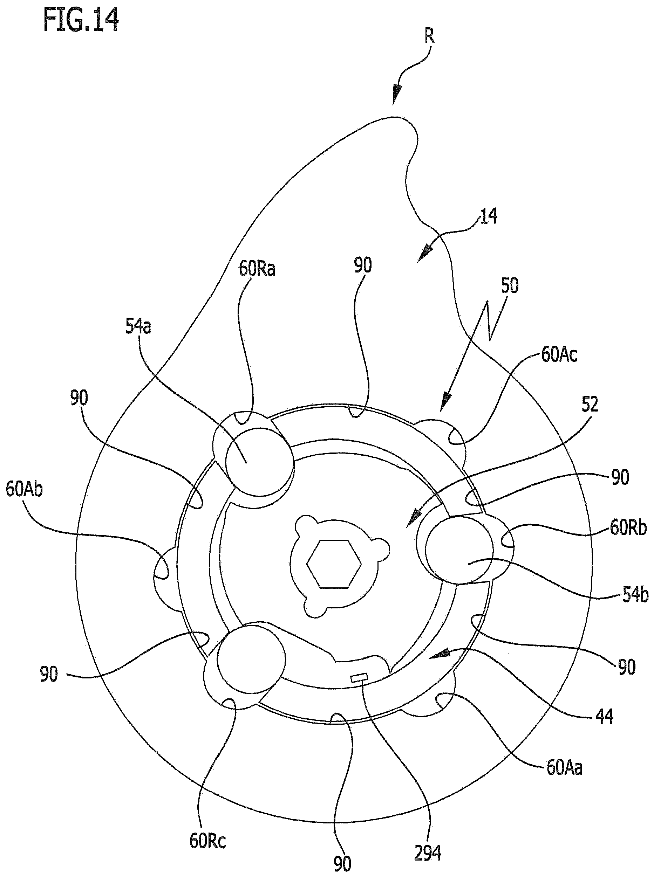

Um die Drehblockierkörper 54 entweder in ihrer Drehblockierstellung durch Beaufschlagen derselben mit den Druckflächen 66 zwischen dem Anfangsbereich 68 und dem Endbereich 70 zu halten oder in der Lösestellung in die Rückzugsaufnahmen 62 eintauchen zu lassen, ist der Betätigungskörper 52 ebenfalls um die Schwenkachse 22, insbesondere koaxial zu dieser, drehbar, und zwar so, dass entweder der Satz von Rückzugsaufnahmen 62a, 62b und 62c den Drehblockierkörpern 54 zugewandt ist und diesen, wie in Fig. 8 dargestellt, in seiner inaktiven Stellung oder Lösestellung die Möglichkeit gibt, beim Übergang in die Lösestellung in die Rückzugsaufnahmen 62 in radialer Richtung zur Schwenkachse 22 hin einzutauchen, um den jeweiligen Drehblockierkörpern 54 die Möglichkeit zu eröffnen, die Arbeitsstellungsaufnahmen 60A oder die Ruhestellungsaufnahmen 60R zu verlassen und den Schwenklagerkörper 14 hinsichtlich einer Drehung um die Schwenkachse 22 relativ zum Führungskörper 40 freizugeben, so dass der Schwenklagerkörper 14 mit dem Kugelhals 10 relativ zur Führungshülse 44 ungehindert und frei drehbar ist, wie in Fig. 8 und Fig. 14 dargestellt, wobei in diesem Fall die Drehblockierkörper 54 sich nicht über die Außenmantelfläche 46 der Führungshülse 44 hinaus erstrecken.

Eine Drehung des Betätigungskörpers 52 bei in den Rückzugsaufnahmen 62 sitzenden Drehblockierkörpern 54 in einer Drehrichtung 72 entgegengesetzt zur Umlaufrichtung 64 bewirkt, dass die Drehblockierkörper 54 aus den Rückzugsaufnahmen 62 heraus bewegt werden und zunächst in der aktiven Stellung oder Drehblockierstellung des Betätigungskörpers 52 auf den Anfangsbereichen 68 der Druckflächen 66 aufsitzen, dabei jedoch beispielsweise bereits in die Aufnahmen 60 eintauchen und damit in ihrer Drehblockierstellung die freie Drehbarkeit des Schwenklagerkörpers 14 relativ zum Führungskörper 40 unterbinden.

Wird der Betätigungskörper 52 in der Drehrichtung 72 entgegengesetzt zur Umlaufrichtung 64 weitergedreht, so wirken immer weiter radial gegenüber der Schwenkachse 22 außen liegenden Bereiche der Druckflächen 66 auf die Drehblockierkörper 54 und drücken somit die Drehblockierkörper 54 zunehmend in der Arbeitsstellung A oder der Ruhestellung R des Kugelhalses 10 in die Arbeitsstellungsaufnahmen 60Aa, 60Ab und 60Ac, Fig. 7, oder in die Ruhestellungsaufnahmen 60Ra, 60Rb und 60Rc, Fig. 13, hinein, um somit eine im Wesentlichen spielfreie Fixierung des Schwenklagerkörpers 14 relativ zum Führungskörper 40, in diesem Fall zur Führungshülse 44, zu erreichen.

In der Drehblockierstellung der Drehblockierkörper 54 steht der Betätigungskörper 52 in seiner aktiven Stellung so, dass die Drehblockierkörper 54, wie in Fig. 7 und Fig. 13 dargestellt, ungefähr auf Mittelbereichen 76, die zwischen den Anfangsbereichen 68 und den Endbereichen 70 liegen, der Druckflächen 66 aufsitzen und von diesen beaufschlagt werden.

Um dem Betätigungskörper 52 die Möglichkeit zu eröffnen, jeweils jeden der drei Drehblockierkörper 54 optimal zu beaufschlagen, ist vorgesehen, dass in der aktiven Stellung eine Zentrierung des Betätigungskörpers 52 entsprechend der Lage der Drehblockierkörper 54 erfolgt. Insbesondere ist der Betätigungskörper 52 so in der Führungshülse 44 gelagert, dass sich der Betätigungskörper 52 aufgrund des radialen Spiels relativ entsprechend der durch Fertigungstoleranzen bedingten Lage der Drehblockierkörper 54 innerhalb des Führungskörpers 40 selbst zentrieren kann, wobei die Selbstzentrierung des Betätigungskörpers 52 geringfügig von einer koaxialen Anordnung zur geometrischen Schwenkachse 22 abweichen kann.

Aufgrund der Selbstzentrierung wirken die Drehblockierkörper 54a, 54b und 54c in der jeweiligen Führungsrichtung 58a, 58b und 58c mit ungefähr gleich großen Kräften auf die Arbeitsstellungsaufnahmen 60Aa, 60Ab und 60Ac oder die Ruhestellungsaufnahmen 60Ra, 60Rb und 60Rc, so dass auch die auf den Betätigungskörper 52 wirkenden Reaktionskräfte ungefähr gleich groß sind.

Vorzugsweise sind die Drehblockierkörper 54 als Kugeln ausgebildet, die somit einerseits an den Betätigungskörper 52 und andererseits auch an den Aufnahmen 60 anliegen.

Somit erfolgt nur eine spielbehaftete drehbare Lagerung des Betätigungskörpers 52 relativ zur Schwenkachse 22, die primär dann relevant ist, wenn der Betätigungskörper 52 die Drehblockierkörper 54 in einer Lösestellung hält, in welcher die Drehblockierkörper 54 in die Rückzugsaufnahmen 62 des Betätigungskörpers 52 eintauchen.

Um den Betätigungskörper 52 zu veranlassen, sich ohne äußere Einwirkung stets in der Drehrichtung 72 so zu bewegen, wobei sich die Drehblockierkörper 54 in Richtung der Drehblockierstellung bewegen, ist der Betätigungskörper 52 durch eine Drehfeder 114 beaufschlagt (Fig. 6), die einerseits auf den Betätigungskörper 52 wirkt und andererseits radial außenliegend an dem Führungskörper 40 abgestützt ist.

Die Drehfeder 114 bewirkt auch, dass der Betätigungskörper 52 die Drehblockierkörper 54 kraftbeaufschlagt in die Arbeitsstellungsaufnahmen 60A oder die Ruhestellungsaufnahmen 60R drückt und somit wird der Schwenklagerkörper 14 spielfrei fixiert, wobei die Spielfreiheit auch bei sich aufgrund der Belastungen im Betrieb verändernden Geometrie der Arbeitsstellungsaufnahmen 60A oder der Ruhestellungsaufnahmen 60R durch ein Weiterdrehen des Betätigungskörpers 52 in der Drehrichtung 72 aufrechterhalten wird.

Die beispielsweise drei Führungsaufnahmen 56 und die in diesen angeordneten Drehblockierkörper 54, sowie die diesen Drehblockierkörpern 54 jeweils zugeordneten Rückzugsaufnahmen 62 mit den sich an diese anschließenden Druckflächen 66 im Betätigungskörper 52 bilden jeweils drei Drehblockiereinheiten 80 und diese sind um die Schwenkachse 22 herum in ungleichen Winkelabständen Wab, Wbc, Wca (bezogen auf die jeweiligen Mittelachsen Ma, Mb, Mc) relativ zueinander angeordnet, wodurch, bezogen auf die Schwenkachse 22 als Drehachse, eine Drehblockierkonfiguration der Drehblockiereinheiten 80 nur bei einer Drehung der Drehblockierkonfiguration um 360° zu einer deckungsgleichen Anordnung der Drehblockiereinheiten 80 führt.

Beispielsweise beträgt der Winkelabstand Wab = 120°, der Winkelabstand Wbc = 137° und der Winkelabstand Wca = 103°, das heißt, dass die Abweichung von gleichen Winkelabständen 17° beträgt.

Es sind bei beispielsweise drei Drehblockiereinheiten insbesondere aber auch Abweichungen von gleichen Winkelabständen von bis zu 30° oder mehr, so dass beispielsweise Winkelabstände von Wab = 120°, Wbc = 150° und Wca = 90° möglich sind.

Desgleichen sind jeweils die Arbeitsstellungsaufnahmen 60A und die Ruhestellungsaufnahmen 60R relativ zueinander bezogen auf die Schwenkachse 22 jeweils in einer Aufnahmenkonfiguration mit denselben Winkelabständen wie die Drehblockiereinheiten 80 relativ zueinander angeordnet, die bezogen auf die Schwenkachse 22 ebenfalls jeweils nur bei einer Drehung um 360° zu einer deckungsgleichen Anordnung der jeweiligen Aufnahmenkonfiguration führen, so dass diese in der Arbeitsstellung A beziehungsweise der Ruhestellung R deckungsgleich zu der Drehblockierkonfiguration ist, so dass in der Arbeitsstellung A beziehungsweise der Ruhestellung R, jeweils ein Drehblockierkörper 54 einer der Drehblockiereinheiten 80 einer der Arbeitsstellungsaufnahmen 60A beziehungsweise einer der Ruhestellungsaufnahmen 60R gegenübersteht und in der Drehblockierstellung mit dieser in Eingriff kommen kann, wie in Fig. 7 und Fig. 13 dargestellt, wodurch der Schwenklagerkörper 14 nur jeweils in der Arbeitsstellung und in der Ruhestellung drehfest relativ zur Schwenklagereinheit 20 fixierbar ist (Fig. 7, Fig. 13).

Wird jedoch der Betätigungskörper 52 in der Arbeitsstellung A oder der Ruhestellung R gegen die Kraftwirkung der Drehfeder 114 in die Lösestellung bewegt, wie nachfolgend beschrieben, so hat jeder der Drehblockierkörper 54 der jeweiligen Drehblockiereinheit 80 die Möglichkeit in die dieser zugeordneten Rückzugsaufnahme 62 einzutauchen, und die jeweilige Arbeitsstellungsaufnahme 60A oder Ruhestellungsaufnahme R zu verlassen, so dass der Schwenklagerkörper 14 um die Schwenkachse 22 auf der Arbeitsstellung A oder der Ruhestellung R heraus schwenkbar ist (Fig. 8, Fig. 14).

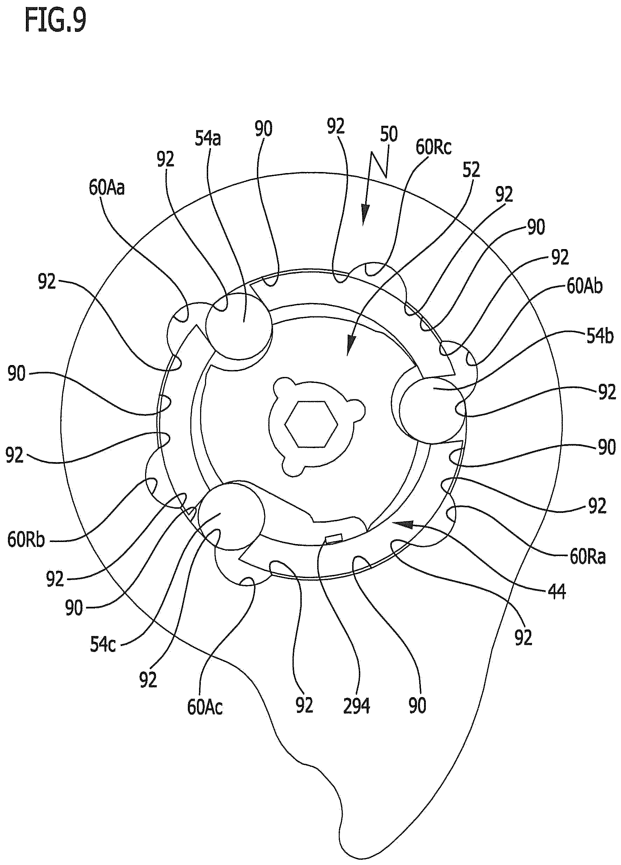

Sobald der Schwenklagerkörper 14 die Arbeitsstellung A oder die Ruhestellung R verlassen hat (Fig. 9), hat die zur Schwenkachse 22 in der Drehblockierkonfiguration angeordnete Gesamtheit der Drehblockiereinheiten 80 in allen Schwenkstellungen zwischen der Arbeitsstellung A oder der Ruhestellung R nicht mehr die Möglichkeit mit der in der jeweiligen Aufnahmenkonfiguration angeordneten Gesamtheit der Arbeitsstellungsaufnahmen 60A oder Ruhestellungsaufnahmen 60R in Eingriff zu kommen, so dass, dann wenn eine Beaufschlagung des Betätigungskörpers 54 in der Drehrichtung 72 erfolgt, die Gesamtheit der in den Rückzugsaufnahmen 62 sitzenden Drehblockierkörper 54 nicht mehr in die Gesamtheit der Arbeitsstellungsaufnahmen 60A oder der Ruhestellungsaufnahmen 60R eingreifen kann, da die Drehblockierkörper 54 zwar durch den durch die Drehfeder 114 in der Drehrichtung 72 beaufschlagten Betätigungskörper 52, insbesondere durch die schräg zur Führungsrichtung 58 verlaufenden gewölbten Grundflächen der Rückzugsaufnahmen 62, in Richtung des Schwenklagerkörpers 14 beaufschlagt werden können, jedoch in jeder der außerhalb der Arbeitsstellung A liegenden Drehstellungen des Schwenklagerkörpers 14 niemals der Gesamtheit der Drehblockierkörper 54 jeweils eine Aufnahme aus der Gesamtheit der Arbeitsstellungsaufnahmen 60A oder der Ruhestellungsaufnahmen 60R gegenübersteht und somit stets mindestens einer der Drehblockierkörper 54 durch eine von zwischen den Arbeitsstellungsaufnahmen 60A und Ruhestellungsaufnahmen 60R verlaufenden, im einfachsten Fall durch die zylindrische Innenfläche 48 des Schwenklagerkörpers 14 gebildeten, Blockierflächen 90 blockiert ist und dadurch eine durch die Drehfeder 114 bewirkte Drehung des Betätigungskörpers 52 in der Drehrichtung 72 verhindert, so dass der Betätigungskörper 52 dadurch auch bei Einwirkung der Drehfeder 114 in der Drehrichtung 72 in allen Schwenkstellungen des Schwenklagerkörpers 14 außerhalb der Arbeitsstellung A und der Ruhestellung R in der Lösestellung gehalten wird und folglich erst wieder bei Erreichen der Arbeitsstellung A in die Drehblockierstellung übergehen kann.

Vorzugsweise ist die Abweichung der Drehblockierkonfiguration der Drehblockiereinheit 80 und die Aufnahmekonfiguration der Aufnahmen 60 von einer symmetrischen Ausbildung so groß, dass dann wenn eine der Drehblockiereinheiten 80 einer der Arbeitsstellungsaufnahmen 60A oder der Ruhestellungsaufnahmen 60R gegenübersteht, so dass der Drehblockierkörper 54 mit dieser Arbeitsstellungsaufnahme 60A oder der Ruhestellungsaufnahmen 60R in Eingriff kommen könnte, mindestens eine, noch besser mindestens zwei, Drehblockiereinheiten 80 relativ zu der nächstliegenden Aufnahme der Arbeitsstellungsaufnahme 60A oder der Ruhestellungsaufnahmen 60R soweit in Drehrichtung versetzt sind, dass ein Berührpunkt des dieser Drehblockiereinheit 80 zugeordneten Drehblockierkörpers 54 bereits auf einer der Blockierflächen 90 liegt und nicht im Bereich einer der Aufnahmen 60 zum Liegen kommen kann, so dass eine zuverlässige Blockierung des Betätigungskörpers 52, insbesondere dann, wenn der Betätigungskörper 52 durch die Drehfeder 114 in der Drehrichtung 72 beaufschlagt ist, durch die in der Lösestellung wirksamen Blockierflächen 90 gewährleistet ist.

Wenn auf den Betätigungskörper 52 mit einer Drehrichtung 64 entgegengesetzt zur Wirkung der Drehfeder 114 eingewirkt und dieser maximal verdreht wird, so liegen die Drehblockierkörper 54 in allen Schwenkstellungen des Schwenklagerkörpers 14 mit Spiel zwischen der jeweiligen Blockierfläche 90 und den Rückzugsaufnahmen 62.

Wenn jedoch die Wirkung der Drehfeder 114 in der Drehrichtung 72 dominiert, so liegen auch beim Verschwenken zwischen der Arbeitsstellung A und der Ruhestellung R in den jeweiligen Schwenkstellungen des Schwenklagerkörpers 14 Verhältnisse vor, wie sie in Fig. 9 bis 12 dargestellt sind.

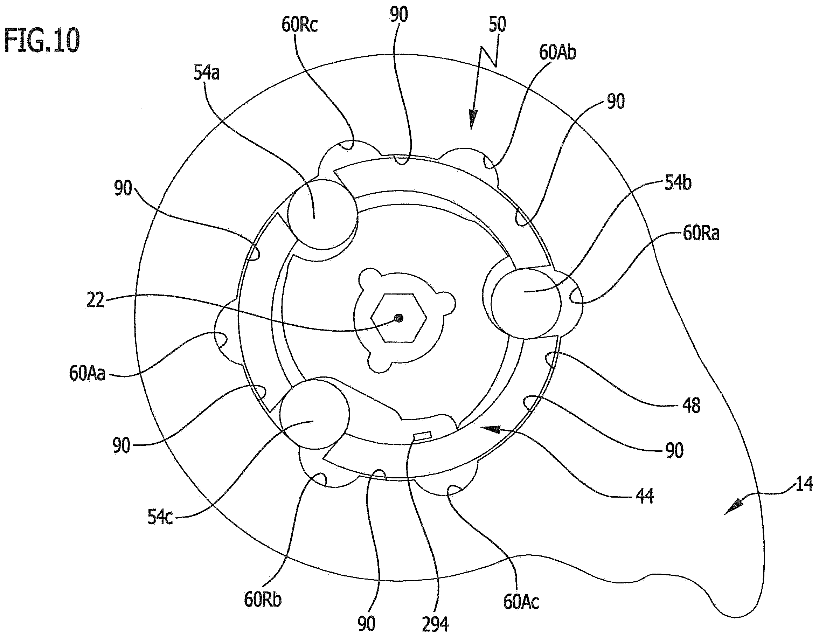

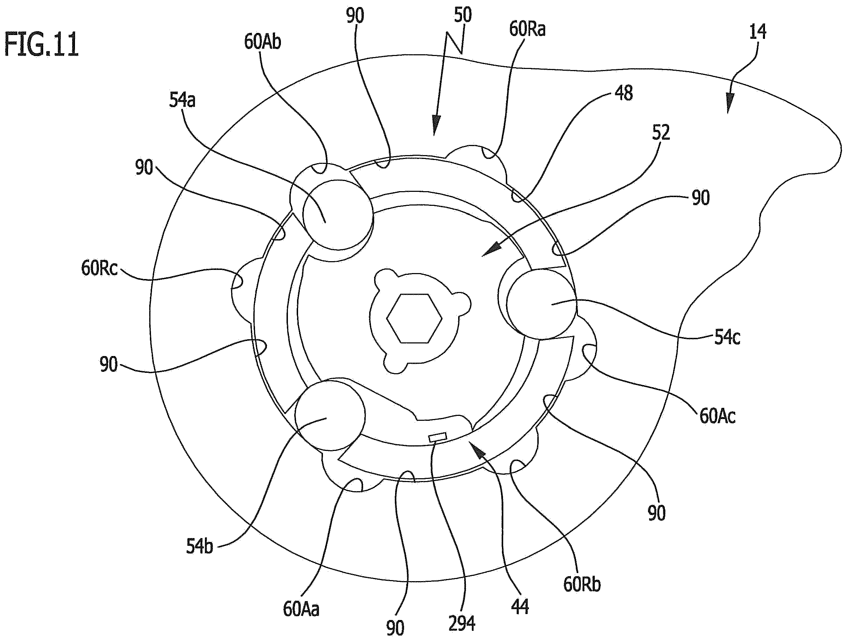

Die Fig. 9 bis 12 zeigen, dass der Betätigungskörper 52 in jeder der Schwenkstellungen des Schwenklagerkörpers 14 durch mindestens einen, vorzugsweise zwei, Drehblockierkörper 54, die an einer der Blockierflächen 90 anliegen, in der Lösestellung gehalten wird, und verhindern, dass einer der Drehblockierkörper 54, beispielsweise der Drehblockierkörper 54b in Fig. 10 oder der Drehblockierkörper 54a in Fig. 11, nicht in die jeweils mit diesem fluchtenden Aufnahme 60 eingreifen kann.

In jedem Fall liegen die Verhältnisse gemäß Fig. 7 bis 14 beim Verschwenken zwischen der Ruhestellung R und der Arbeitsstellung A vor, wobei durch das Anliegen der Drehblockierkörper 54 an den Blockierflächen 90 gemäß Fig. 9 bis 12 beim Verschwenken zwischen der Ruhestellung R und der Arbeitsstellung A die Drehblockierkörper 54 bei geringer Geräuschentwicklung von den Blockierflächen 90 über sich unmittelbar und insbesondere stufenlos an diese anschließende Öffnungsränder 92 der Arbeitsstellungsaufnahmen 60A und der Ruhestellungsaufnahmen 60R in die Arbeitsstellungsaufnahmen 60A oder die Ruhestellungsaufnahmen 60R gleiten und in die Drehblockierstellung gemäß Fig. 7 oder Fig. 13 übergehen.

Die Führungshülse 44 erstreckt sich vorzugsweise mit einem eine Aufnahme 102 für den Betätigungskörper 52 bildenden Abschnitt zwischen dem Flansch 42 und einem die Führungshülse 44 abschließenden sich radial zur Schwenkachse 22 hin erstreckenden Flansch 104, welcher vorzugsweise einstückig an die Führungshülse 44 angeformt ist und die Aufnahme 102 für den Betätigungskörper 52 begrenzt, so dass der Betätigungskörper 52 radial zur Schwenkachse 22 durch die Aufnahme 102 der Führungshülse 44 geführt ist und axial in Richtung der Schwenkachse 22 durch Anlage an einer Innenseite 108 des Flansches 104 geführt ist.

Der Flansch 104 weist ferner noch eine zur Schwenkachse 22 koaxiale Aufnahme 106 auf, in welcher ein von einer stehenden Welle 100 durchsetzter Einsatz 110 eingesetzt, insbesondere eingeschraubt, ist, der in der Aufnahme 106 sitzt und die Welle 100 relativ zur Führungshülse 44 drehfest fixiert.

Auf einer dem Flansch 104 gegenüberliegenden Seite der Aufnahme 102 für den Betätigungskörper 52 bildet die Führungshülse 44, beispielsweise mit einem den Flansch 42 durchsetzenden Abschnitt, eine Drehfederaufnahme 112, in welcher im Anschluss an den Betätigungskörper 52 die Drehfeder 114 angeordnet ist, die einerseits mit einem äußeren Ende in der Drehfederaufnahme 112 fixiert ist und mit einem inneren Ende mit einer Antriebshülse 122 verbunden ist, welche drehfest mit dem Betätigungskörper 52 gekoppelt ist.

Hierzu ist die Antriebshülse 122, wie in den Fig. 6, 7 und 16 dargestellt, beispielsweise mit Fortsätzen 124 versehen, die zur Herstellung einer Formschlussverbindung in entsprechende Ausnehmungen 126 in den Betätigungskörper 52 eingreifen.

Dadurch, dass die Drehfeder 114 auf die Antriebshülse 122 wirkt, die drehfest mit dem Betätigungskörper 52 gekoppelt ist, erfolgt durch das Einwirken der Drehfeder 114 auf die Antriebshülse 122 ein Antrieb des Betätigungskörpers 52 in der Drehrichtung 72, so dass der Betätigungskörper 52 bei ungehinderter Einwirkung der Drehfeder 114 auf die Antriebshülse 122 den Betätigungskörper 52 stets in der Drehrichtung 72 beaufschlagt, so dass dieser die Tendenz hat die Drehblockierkörper 54 kraftbeaufschlagt in der Führungsrichtung 58 radial von der Schwenkachse 22 weg nach außen zu bewegen, wobei diese Bewegung durch die Blockierflächen 90 in allen vorgesehenen Schwenkstellungen des Schwenklagerkörpers 14, mit Ausnahme der Arbeitsstellung A und der Ruhestellung R, verhindert wird und folglich nur in der Arbeitsstellung A und der Ruhestellung R die Drehblockierkörper 54 in die Arbeitsstellungsaufnahmen A und die Ruhestellungsaufnahmen R gedrückt werden und somit der Schwenklagerkörper 14 relativ zur Führungshülse 44 drehfest und insbesondere spielfrei fixiert wird.

Um die Drehblockierkörper 54 in die Lösestellung bewegen zu können, ist eine Einwirkung auf den Betätigungskörper 52 entgegengesetzt zur Drehrichtung 72 und auch somit entgegengesetzt zur Wirkung der Drehfeder 114 erforderlich.

Hierzu ist die Antriebshülse 122 mittels eines als Ganzes mit 130 bezeichneten Planetengetriebes 130 antreibbar (Fig. 6), welches in einer Getriebeaufnahme 132 der Führungshülse 44, insbesondere koaxial zur Schwenkachse 22, angeordnet ist, welche beispielsweise teilweise innerhalb des Durchbruchs 27 der Trägerplatte 26 angeordnet ist und vorzugsweise sich auf einer dem Flansch 42 gegenüberliegenden Seite von dem Durchbruch 27 der Trägerplatte 26 weg erstreckt.

Das Planetengetriebe 130 (Fig. 15) umfasst seinerseits ein Hohlrad 142, welches in der Getriebeaufnahme 132 geführt ist und mit einer Innenverzahnung 144 versehen ist, mit welcher Planetenräder 146 mit ihrer Außenverzahnung 148 in Eingriff stehen.

Dabei sind die Planetenräder 146 drehbar an einem Planetenradträger 152 gehalten, der seinerseits drehfest mit der stehenden Welle 100 verbunden ist.

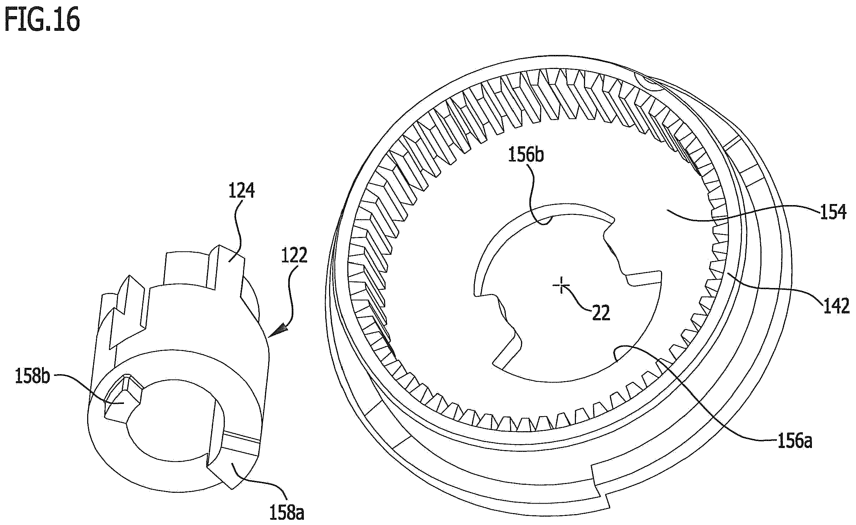

Ferner umfasst - wie in Fig. 16 dargestellt - das Hohlrad 142 einen zwischen dem Planetenradträger 152 und der Drehfeder 114 liegenden Flanschkörper 154, welcher sich ebenfalls in Richtung der Welle 100 erstreckt, diese umschließt, jedoch relativ zu dieser drehbar ist und einen Abtrieb des Planetengetriebes 130 zum Betätigen der Drehblockiereinrichtung 50 bildet.

Wie in Fig. 16 dargestellt, weist der Flanschkörper 154 um die Schwenkachse 22 umlaufend angeordnete kreisbogenförmige Antriebsschlitze 156a, 156b auf, welche mit in diese eingreifenden Antriebsfingern 158a, 158b der Antriebshülse 122 zusammenwirken, und welche allerdings so gestaltet sind, dass durch die Differenz zwischen dem Winkelbereich um die Schwenkachse 22, über welchen sich die Antriebsschlitze 156 erstrecken, und dem Winkelbereich um die Schwenkachse 22, über welchen sich die Antriebsfinger 158 erstrecken, ein Freigang der Antriebshülse 122 relativ zum Hohlrad 142 möglich ist, der nachfolgend noch im Einzelnen erläutert wird.

Die Planetenräder 146 sind ferner mit ihrer Außenverzahnung 148 in Eingriff mit einer Außenverzahnung 164 eines Sonnenrades 162 des Planetengetriebes 130, das auf einer als Ganzes mit 166 bezeichneten Antriebswelle sitzt, die koaxial zur Schwenkachse 22 angeordnet ist und beispielsweise mittels eines endseitigen Wellenstummels 168, der in eine stirnseitige Bohrung 172 der stehenden Welle 100 eingreift, jedoch koaxial zu dieser gelagert ist.

Die Antriebswelle 166 trägt im Abstand von dem Planetengetriebe 130 ein Antriebszahnrad 174, beispielsweise ein Kegelzahnrad, welches von einem Abtriebszahnrad einer motorischen Antriebseinheit 182 angetrieben ist, die beispielsweise einerseits einen Antriebsmotor, vorzugsweise einen Elektromotor, und andererseits ein Untersetzungsgetriebe zum Antreiben des Antriebszahnrads umfasst.

Die Antriebseinheit 182 ist beispielsweise an einem Abdeckkörper 184 gehalten, welcher ausgehend von der Trägerplatte 126 die Antriebswelle 166 mit dem Antriebszahnrad 174 sowie das mit diesem kämmende Abtriebszahnrad übergreift und außerdem noch die Antriebswelle 166 auf einer dem Wellenstummel 168 abgewandten Seite lagert.

Somit bilden das Planetengetriebe 130 und die Antriebseinheit 182 beispielsweise eine Betätigungseinrichtung 180 für die Drehblockiereinrichtung 50.

Die mit dem Planetenradträger 152 drehfest gekoppelte stehende Welle 100 ist mit dem Flansch 104 des Führungskörpers 40 drehfest verbunden.

Ein Endflansch 198 des Schwenklagerkörpers 14 übergreift dabei den Flansch 104 des Führungskörpers 40 in dem außenliegenden Bereich 200 und erstreckt sich bis zu einem Führungsansatz 202 des Flansches 104, wobei der Endflansch 198 beispielsweise mit einer radial innen liegenden Zylinderfläche 204 eine äußere Zylinderfläche 206 des Führungsansatzes 202 umgreift und beispielsweise an dieser anliegt und dadurch ebenfalls noch zusätzlich am Führungsansatz 202 koaxial zur Schwenkachse 22 geführt ist.

Darüber hinaus erstreckt sich in der Aufnahme 106 des Führungsansatzes 202 ein Gewinde 212, in welchem der Einsatz 110 fixiert, insbesondere eingeschraubt, ist, der mit einem Außenflansch 214 den Endflansch 198 partiell in einem radial innenliegenden Bereich übergreift, so dass der Endflansch 198 des Schwenklagerkörpers 14 axial unverschiebbar zwischen dem Flansch 104 und dem Außenflansch 214 des Einsatzes 110 und somit relativ zum Führungskörper 40 axial unverschiebbar geführt ist.

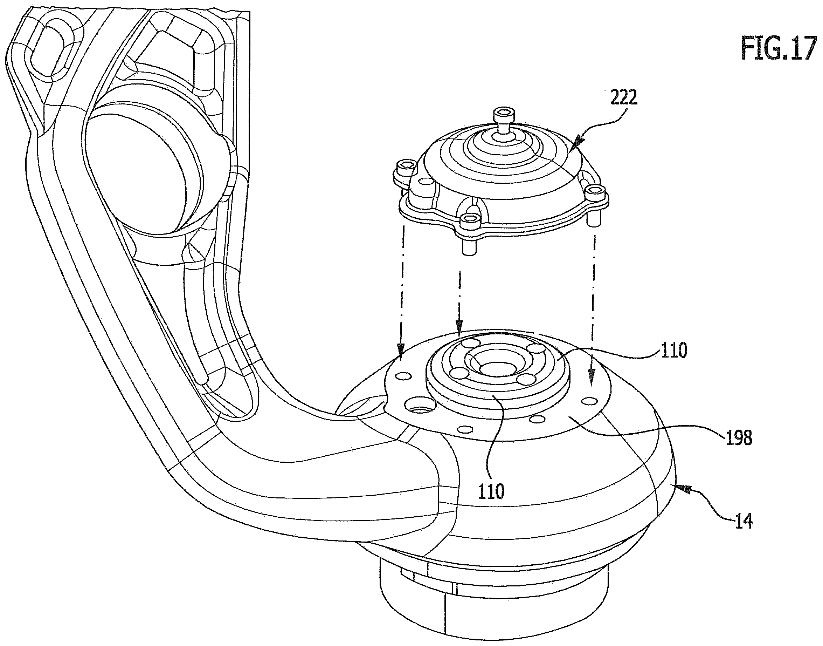

Auf dem Endflansch 198 ist ferner eine Abdeckung 222 drehfest montiert, so dass die Abdeckung 222 mit dem Schwenklagerkörper 14 eine Einheit bildet, die um die Schwenkachse 22 drehbar ist (Fig. 17).

Die Abdeckung 222 sitzt dabei auf dem Endflansch 198 auf, und ist auf diesem drehfest fixiert.

Bei der vorstehend beschriebenen Lösung ist ein Satz von Arbeitsstellungsaufnahmen 60A für die drehfeste Festlegung des Schwenklagerkörpers 14 in der Arbeitsstellung A vorgesehen, sowie ein Satz von Ruhestellungsaufnahmen 60R für die drehfeste Festlegung des Schwenklagerkörpers 14 in der Ruhestellung R.

Zum sicheren Betrieb der erfindungsgemäßen Anhängekupplung ist eine als Ganzes mit 270 bezeichnete Blockiereinrichtung vorgesehen, welche einen Blockierkörper 272 umfasst, der seinerseits in einer Führung 274, beispielsweise ausgebildet als Bohrung an dem Flansch 104 der Führungshülse des Führungskörpers 40, in Richtung parallel zur Schwenkachse 22 geführt ist.

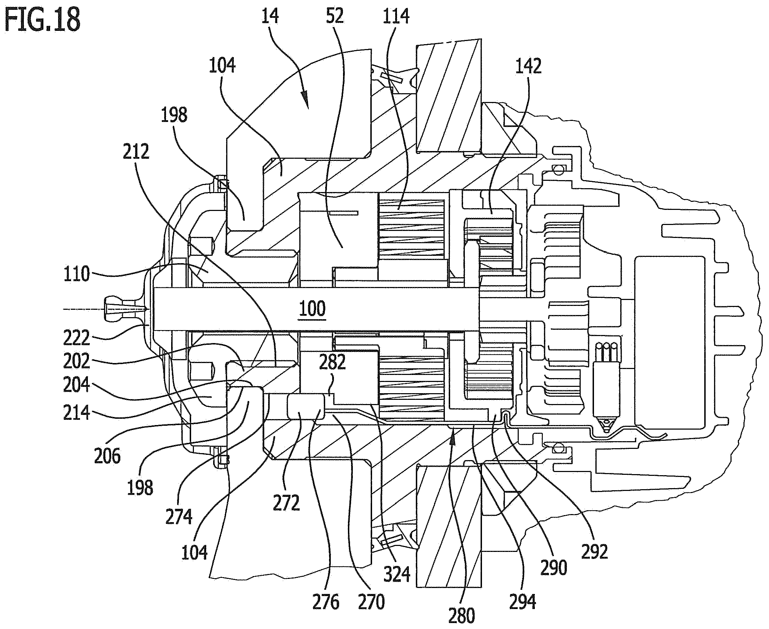

Wie in Fig. 18 dargestellt, ist der Blockierkörper 272 so fixierbar, dass er in einer Sicherungsstellung mit einem dem Betätigungskörper 52 zugewandten Ende 276 in der Lage ist, ausgehend von der Führung 274 in eine Aufnahme des Betätigungskörpers 52 einzugreifen, wenn dieser in der Drehblockierstellung steht und somit den Schwenklagerkörper 14 und den Führungskörper 40 relativ zueinander fixiert.

Diese Drehblockierstellung nimmt der Betätigungskörper 52 sowohl in der Arbeitsstellung als auch in der Ruhestellung ein, so dass sowohl die Arbeitsstellung als auch die Ruhestellung durch den Betätigungskörper 52 eine zusätzliche Sicherung erfährt, obwohl der Betätigungskörper aufgrund der Beaufschlagung durch die Drehfeder 114 bereits in Richtung der Drehblockierstellung beaufschlagt ist.

Ferner ist der Blockierkörper 272 ausgehend von der Sicherungsstellung in eine Bereitschaftsstellung bewegbar, in welcher dieser mit dem Ende 276 nicht mehr in die Ausnehmung 282 des Betätigungskörpers 52 eingreift, sondern vorzugsweise innerhalb der Ausdehnung des Flansches 104 in Richtung parallel zur Schwenkachse 22 positioniert ist.

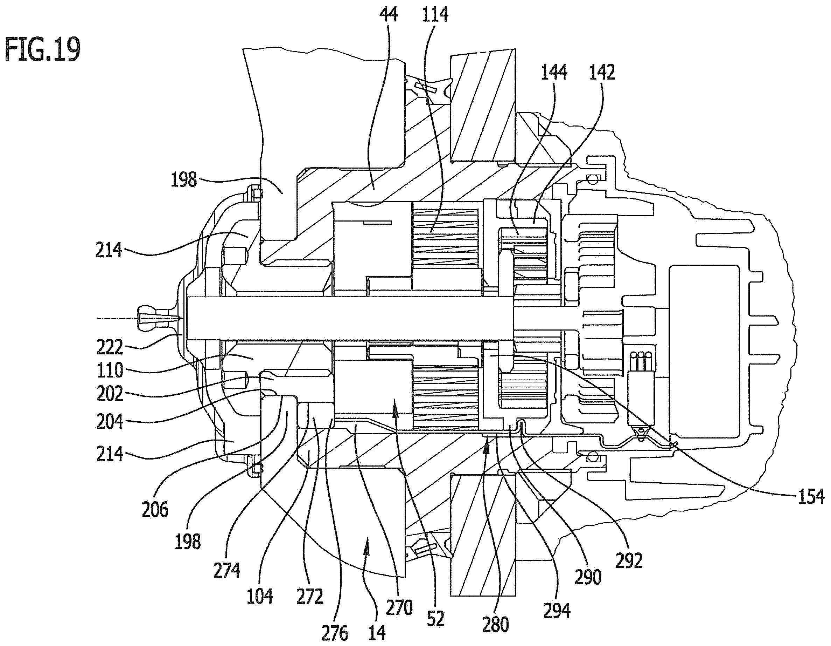

Dabei verbleibt der Blockierkörper 272 in der Bereitschaftsstellung ohne Blockierwirkung und ist dabei vorzugsweise ebenfalls innerhalb der Ausdehnung des Flansches 104 positioniert, wie dies in Fig. 19 dargestellt ist.

Zur Bewegung des Blockierkörpers 272 zwischen der Bereitschaftsstellung und der Sicherungsstellung ist eine Betätigungseinrichtung 280 vorgesehen, welche mit der Betätigungseinheit 180 für die Drehblockiereinrichtung gekoppelt ist.

Die Betätigungseinrichtung 280 umfasst eine als Ganzes mit 290 bezeichnete Kulissenführung, wobei die Kulissenführung 290 auf einen Kulissenfolger 292 wirkt, der seinerseits auf ein mit dem Blockierkörper 272 gekoppeltes Übertragungselement 294 einwirkt, so dass dadurch der Blockierkörper 272 in die Sicherungsstellung und in die Bereitschaftsstellung bewegbar ist.

Vorzugsweise ist dabei die Kulissenführung 290 umfangsseitig des Hohlrades 142 der Betätigungseinheit 180 angeordnet, welches Teil des Planetengetriebes 130 ist, das einerseits über die Antriebshülse 122 zum Antrieb des Betätigungskörpers 52 der Drehblockiereinrichtung 50 dient.

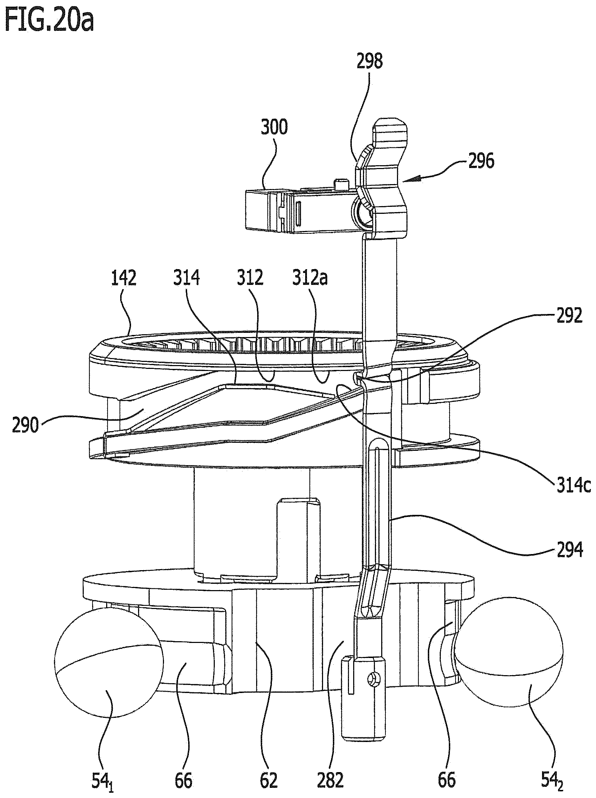

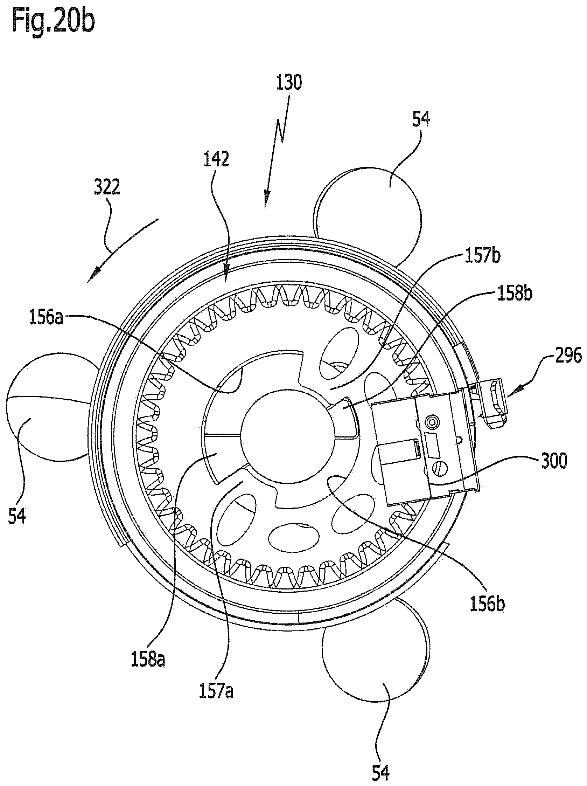

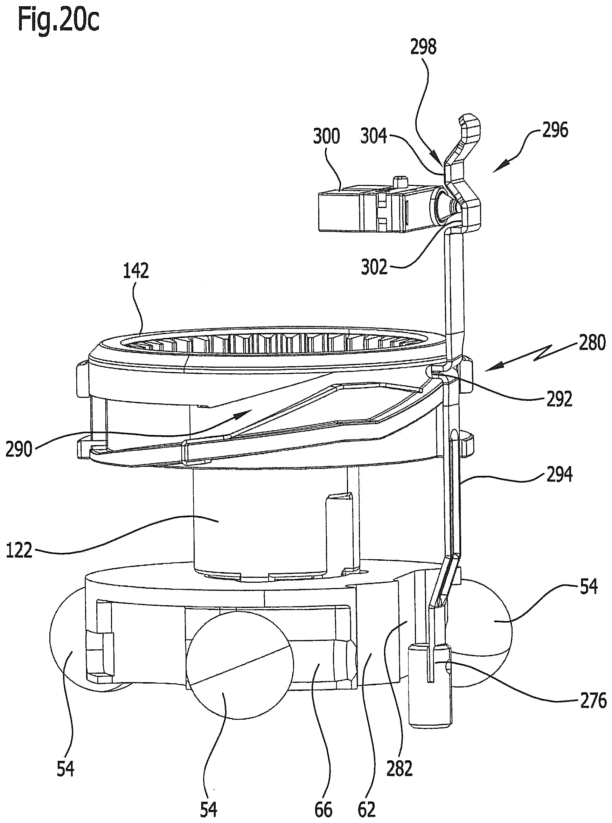

Wie in Fig. 20, insbesondere Fig. 20a, dargestellt, steht der Betätigungskörper 52 in der Drehblockierstellung der Drehblockiereinrichtung 50 so, dass dieser die Drehblockierkörper 54 in radialer Richtung zur Schwenkachse 22 beaufschlagt und in der Führungsrichtung 58 in die vorgesehenen Aufnahmen hineinbewegt, um somit entweder in der Arbeitsstellung A oder in der Ruhestellung R den Schwenklagerkörper 14 drehfest relativ zur Schwenkachse 22 zu fixieren.

Hierzu wirken insbesondere die Druckflächen 66 des Betätigungskörpers auf die Drehblockierkörper 54, in Fig. 20a dargestellt.

Beispielsweise liegt dabei die Ausnehmung 282, in welche der Blockierkörper 272 mit seinem ersten Ende 276 zur Sicherung der Drehstellung des Betätigungskörpers 52 eingreift, zwischen der Rückzugsaufnahme 62 eines des Drehblockierkörpers 54₁ und einer Druckfläche 66 eines in Umfangsrichtung nächstfolgenden Drehblockierkörpers 54₂.

Außerdem umfasst die Kulissenführung 290, wie in Fig. 20a dargestellt, umfangsseitig des Hohlrades 142 einander zugewandt angeordnete Kulissenbahnen 312 und 314, die zur Positionierung des Kulissenfolgers 292 in der Sicherungsstellung des Blockierkörpers mit Positionierabschnitten 312a und 314f derart relativ zueinander verlaufen, dass der Kulissenfolger 292 exakt zwischen diesen Positionierabschnitten 312a und 314c der beiden Kulissenbahnen 12 und 14 in der Sicherungsstellung und somit definiert positioniert ist und keinerlei Möglichkeit hat, sich beispielsweise in Richtung parallel zur Schwenkachse 22 in die Bereitschaftsstellung zu bewegen, sondern in der Sicherungsstellung fixiert bleibt, so dass durch diese exakt definierte Positionierung des Kulissenfolgers 292 das Übertragungselement 294 den Blockierkörper 272 unverschiebbar in der Sicherungsstellung positioniert und somit den Betätigungskörper 52 zusätzlich sichert.

Außerdem erstreckt sich das Übertragungselement 294, wie in Fig. 20c dargestellt, bis zu einem Sensorbetätigungselement 296, welches einen Sensor 300 bei der Bewegung des Übertragungselements 294 mittels eines relativ zum Sensor 300 bewegbaren Positionsangabeelements 298 betätigt, wobei das Positionisangabeelement 298 im dargestellten Fall eines als Taster ausgebildeten Sensors 300 eine erste Tastfläche 302 und eine zweite Tastfläche 304 aufweist.

Beispielsweise dient die erste Tastfläche 302 zur Erfassung der Sicherungsstellung und die zweite Tastfläche 304 zur Erfassung der Bereitschaftsstellung, wobei die Tastflächen 302 und 304 zu einer unterschiedlich starken Betätigung des Sensors 300 dienen.

Der Sensor 300 kann aber auch ein Magnetfeldsensor sein, der unterschiedlich magnetisierte Bereiche des Positionsangabeelements 298 erfasst.

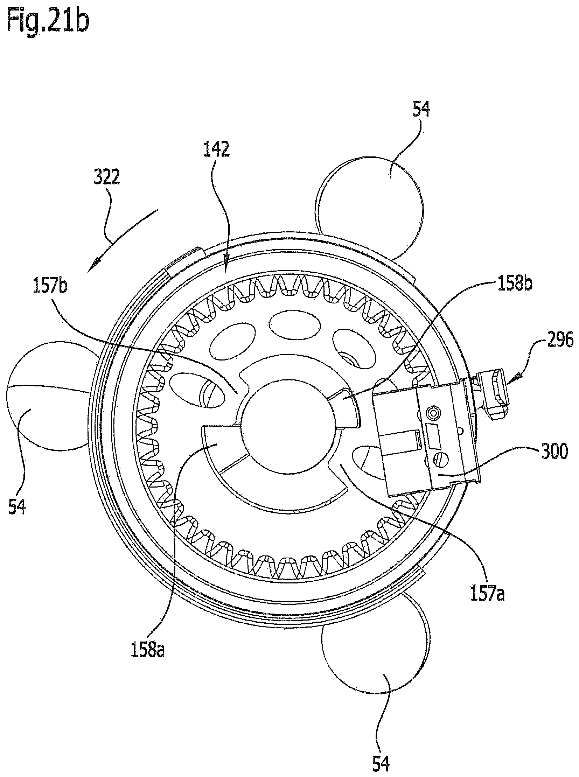

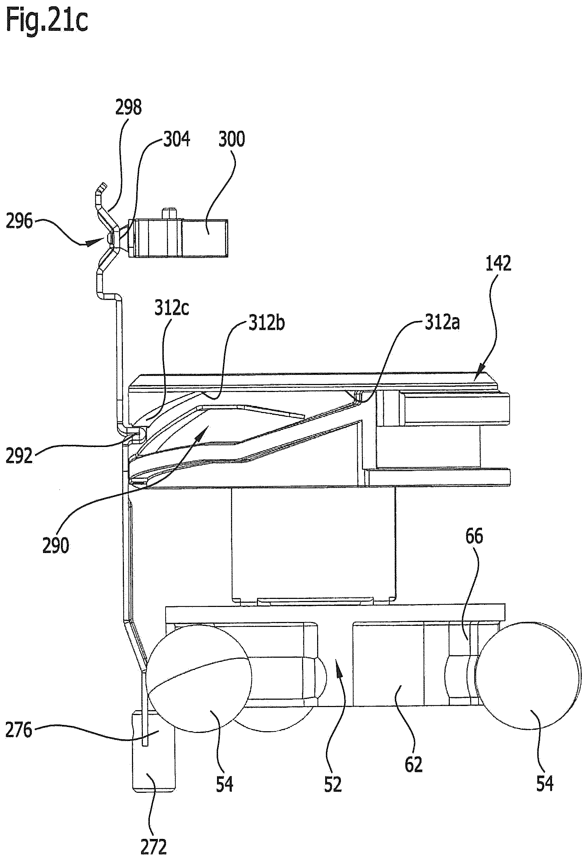

Wie ferner in Fig. 20b dargestellt, liegen in der Ausgangsstellung des Hohlrades 142 des Planetengetriebes 130 die in Antriebsschlitze 156a und 156b eingreifenden Antriebsfinger 158a und 158b an den die Antriebsschlitze 156a und 156b trennenden Antriebsstegen 157a und 157b derart an, dass ein Antreiben des Hohlrades 142 in Drehrichtung 322 zunächst keinen Antrieb der Antriebsfinger 158a und 158b bewirkt, da das Hohlrad 142 sich in der Drehrichtung 322 bewegt, in welcher die Antriebsstege 157a und 157b sich von den Antriebsfingern 158a und 158b wegbewegen, wie in Fig. 21b dargestellt.

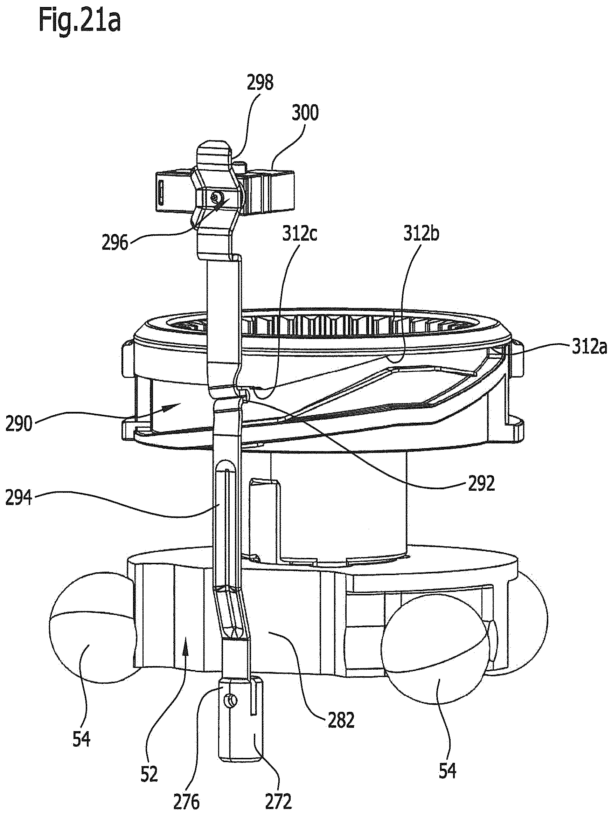

Dies hat wiederum zur Folge, dass wie in Fig.21a dargestellt, der Kulissenfolger 292 sich längs eines Ausschiebeabschnittes 312b der Kulissenführung 290 bewegt, der den Kulissenfolger 292 in Richtung des Blockierkörpers 272 verschiebt und somit den Blockierkörper 272 mit dem Ende 276 aus der Aufnahme 282 des Betätigungskörpers 52 herausbewegt und die in Fig. 21a dargestellte Bereitschaftsstellung bei Erreichen des Positionierabschnitts 312c einnimmt.

Da sich der Blockierkörper 272 aufgrund des Endflansches 198 des Schwenklagerkörpers 14 nicht über die Bereitschaftsstellung in der Führung 274 hinausbewegen kann, hält der Positionierabschnitt 312c zusammen mit dem Endflansch 198 den Blockierkörper 272 in der Bereitschaftsstellung, wie in Fig. 21a dargestellt.

In dieser Bereitschaftsstellung, vorgegeben durch den Positionierabschnitt 312c wurde aufgrund des Übertragungselements 294 auch das Sensorbetätigungselement 296 relativ zum Sensor 300 bewegt, so dass dieser nunmehr von der Tastfläche 304 beaufschlagt ist und das Erreichen der Bereitschaftsstellung erkennt.

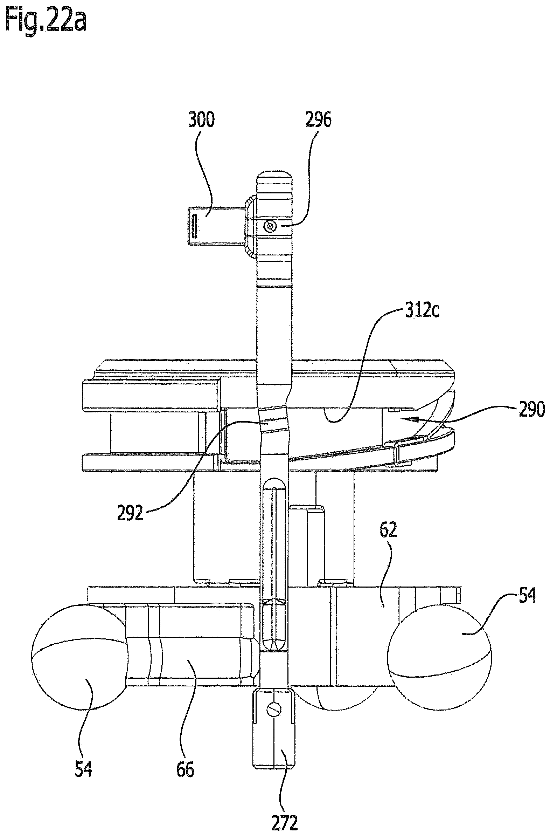

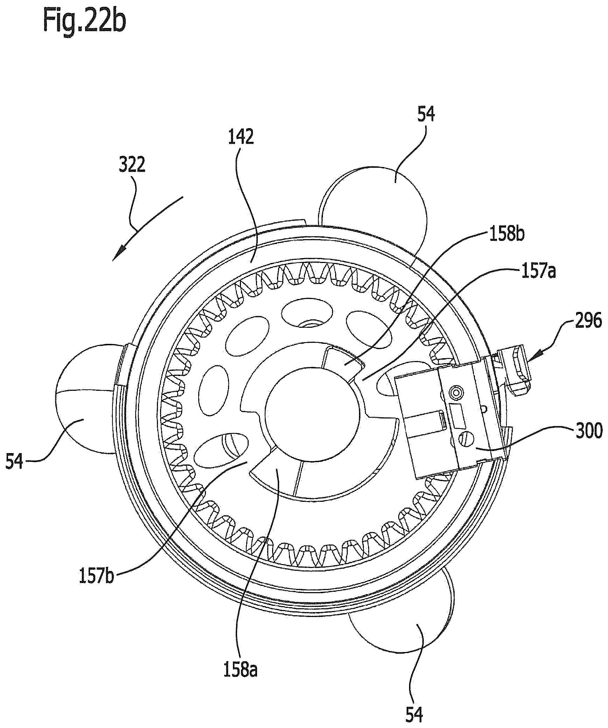

In dieser Bereitschaftsstellung ist der Betätigungskörper 52 entsichert, so dass nunmehr eine weitere Drehung des Hohlrades 142 zur Folge hat, dass die Antriebsstege 157b und 157a die Antriebsfinger 158a und 158b ab ihrem Anliegen an den Antriebsfingern 158a und 158b bewirken, dass nunmehr, wie in Fig. 22b dargestellt, ein Weiterdrehen des Hohlrades 142 in der Drehrichtung 322 zu einem Lösen der Drehbockierstellung führt, da der Betätigungskörper 52 gegen die Kraft der Drehfeder 114 von der Drehblockierstellung in die Lösestellung bewegt wird.

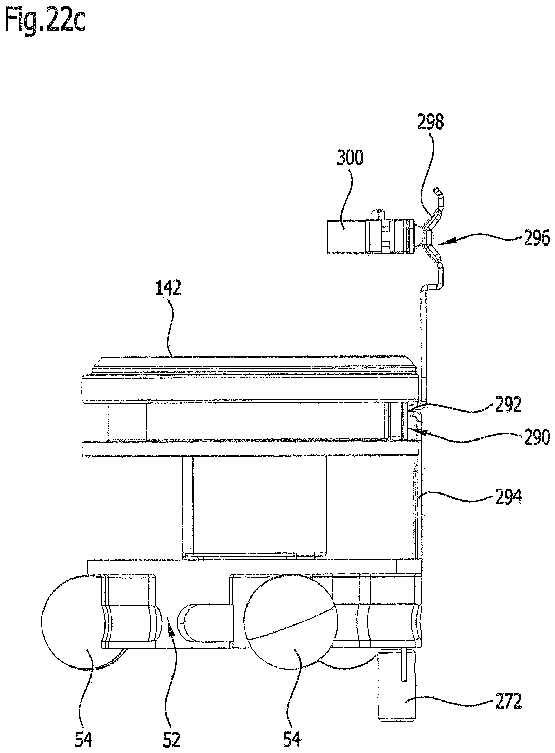

Dabei bewegt sich der Kulissenfolger 292, wie in Fig. 22c dargestellt, nach wie vor auf dem Positionierabschnitt 312c und hält, wie bereits beschrieben, den Blockierkörper 272 in der Bereitschaftsstellung, wobei die Drehblockierkörper 54 in diesem Fall in ihrer Lösestellung stehen.

Bereits mit dem ersten Lösen der Drehblockierstellung hat der Kugelhals 14 aufgrund der Einwirkung der Schwerkraft die Möglichkeit, die Arbeitsstellung oder Ruhestellung zu verlassen und somit aus der Arbeitsstellung oder Ruhestellung heraus in Richtung der Fahrbahn in eine Zwischenstellung zu verschwenken, wobei aufgrund der Anordnung der der Arbeitsstellungsaufnahmen 60 A und der Ruhestellungsaufnahmen 60 R sowie der in den Zwischenstellungen zwischen diesen am Übergang von der Lösestellung in die Drehblockierstellung gehinderten Drehblockierkörper 54 haben die Drehblockierkörper 54 keine Möglichkeit, die Lösestellung vor Erreichen der Arbeitsstellung oder der Ruhestellung zu verlassen.

Ausgehend von der Arbeitsstellung oder Ruhestellung ist üblicherweise daher zu erwarten, dass der Nutzer der Anhängekupplung den Kugelhals 14 ausgehend von seiner in Schwerkraftrichtung nach unten hängenden Stellung in Richtung der Ruhestellung bzw. der Arbeitsstellung bewegen wird.

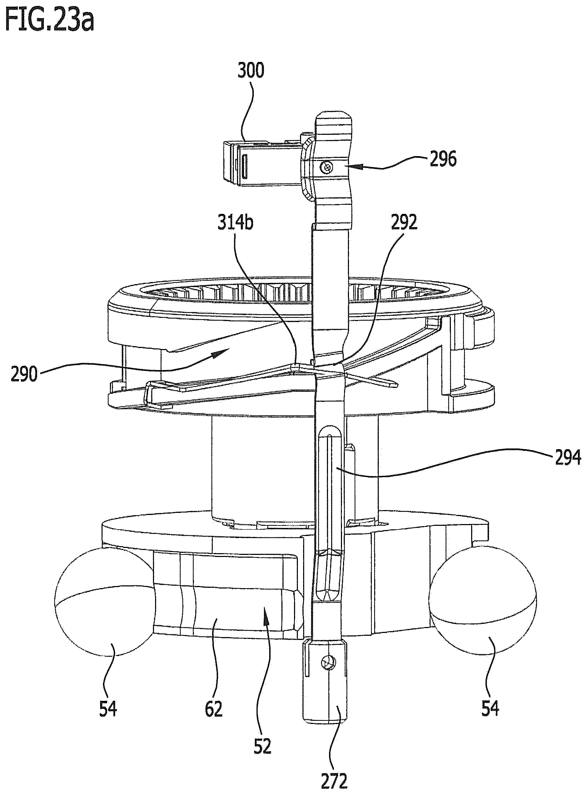

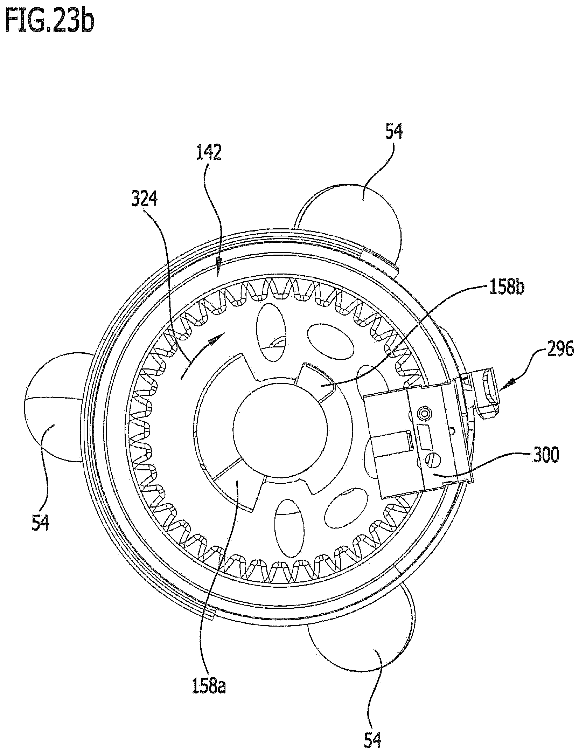

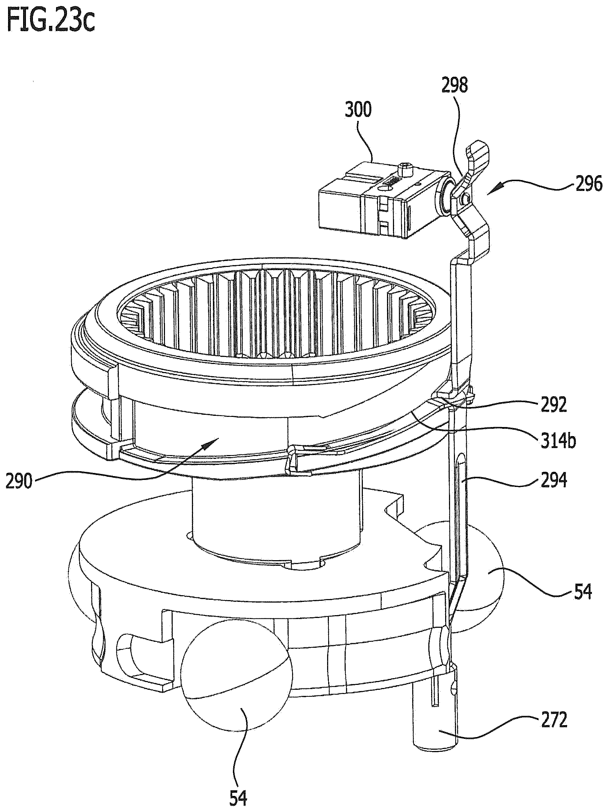

Der Antrieb der Betätigungseinheit 180 hat daher bei Erreichen des Positionierabschnitts 312c bereits die Drehrichtung geändert und das Hohlrad 142 in der der Drehrichtung 322 entgegengesetzten Drehrichtung 324 soweit zurückgedreht, dass der Kulissenfolger 292 durch einen federelastischen Ausschiebeabschnitt 314b der Kulissenbahn 314 beaufschlagt ist, welcher auf den Bahnfolger 292 in Richtung der Sicherungsstellung einwirkt, allerdings den Bahnfolger 292 noch nicht in die Sicherungsstellung bewegen kann, da der Blockierkörper 272 durch die noch vorhandene Lösestellung des Betätigungskörpers 52 daran gehindert ist, in die Drehblockierstellung überzugehen, wie in Fig. 23a und 23c dargestellt.

In den Fig. 23a bis 23c befindet sich der Kugelhals 10 noch nicht in der vorgesehenen Endstellung, das heißt beispielsweise der Arbeitsstellung oder der Ruhestellung, da die Drehblockiereinrichtung 50 noch in der Lösestellung steht und nicht die Chance hatte, in die Drehbockierstellung überzugehen.

Andererseits ist in dieser Stellung der Kulissenfolger 292 durch den federelastischen Ausschiebeabschnitt 314b federelastisch in Richtung der Sicherungsstellung beaufschlagt, kann jedoch noch nicht in die Sicherungsstellung übergehen, da ebenfalls der Betätigungskörper 52 noch in der Lösestellung steht.

Außerdem kann der Motor das Hohlrad 142 lediglich in die vorstehend genannte Stellung zurückdrehen, da ein weiteres Zurückdrehen des Hohlrades 142 in der Drehrichtung 324 durch die Antriebsfinger 158a und 158b, die mit der Drehstellung des Betätigungskörpers 52 gekoppelt sind, daran hindert, weiter in Richtung der Ausgangsstellung zurückzudrehen.

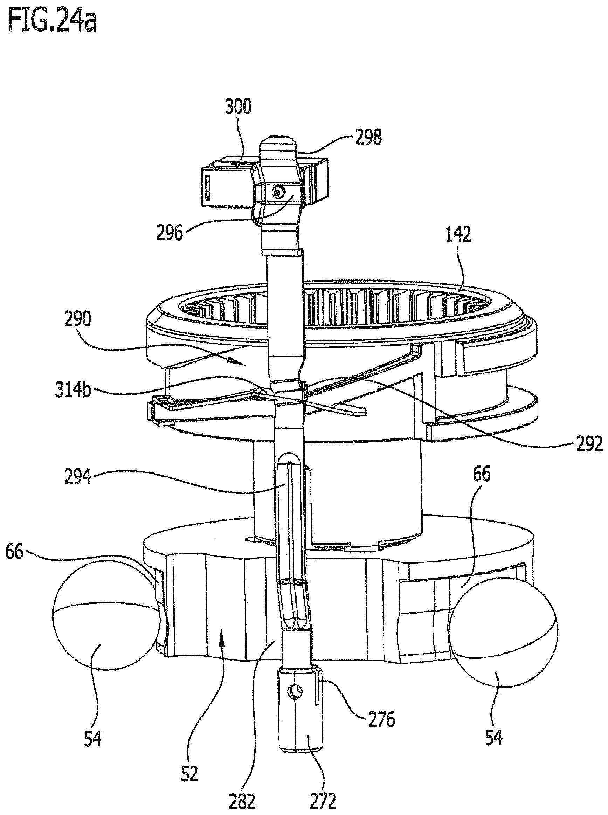

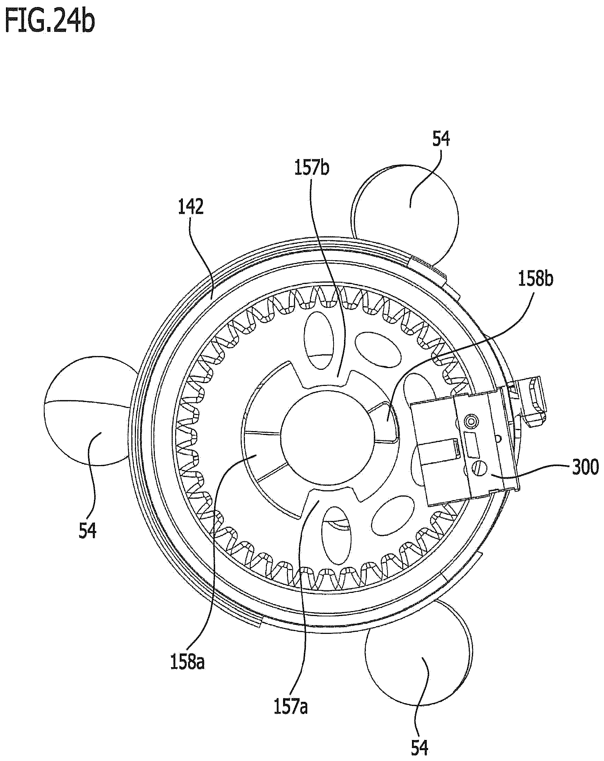

Erst wenn durch die manuell eingeleitete Schwenkbewegung des Kugelhalses 14 dieser die Ruhestellung oder Arbeitsstellung erreicht hat, kann der Betätigungskörper 52, beaufschlagt durch die Drehfeder 114, von der Lösestellung in die Drehblockierstellung übergehen und in dieser Stellung ist die Antriebshülse 122 mit den Antriebsfingern 158a und 158b in der der Drehblockierstellung entsprechenden Stellung, wie in Fig. 24a dargestellt, da die Drehblockierkörper 54 durch die Druckflächen 66 beaufschlagt und somit radial in Richtung ihrer Drehblockierstellung verschoben sind.

Diese Drehblockierstellung des Betätigungskörpers 52 erlaubt nun dem elastisch wirkenden Ausschiebeabschnitt 314b derart auf den Kulissenfolger 292 einzuwirken, dass dieser den Blockierkörper 272 mit dem Ende 276 in die Aufnahme 282 im Betätigungskörper 52 in die Sicherungsstellung einschiebt und somit den Betätigungskörper 52 zusätzlich zu der Drehfeder 114, die ohnehin auf den Betätigungskörper 52 in dieser Stellung wirkt, zu sichern.

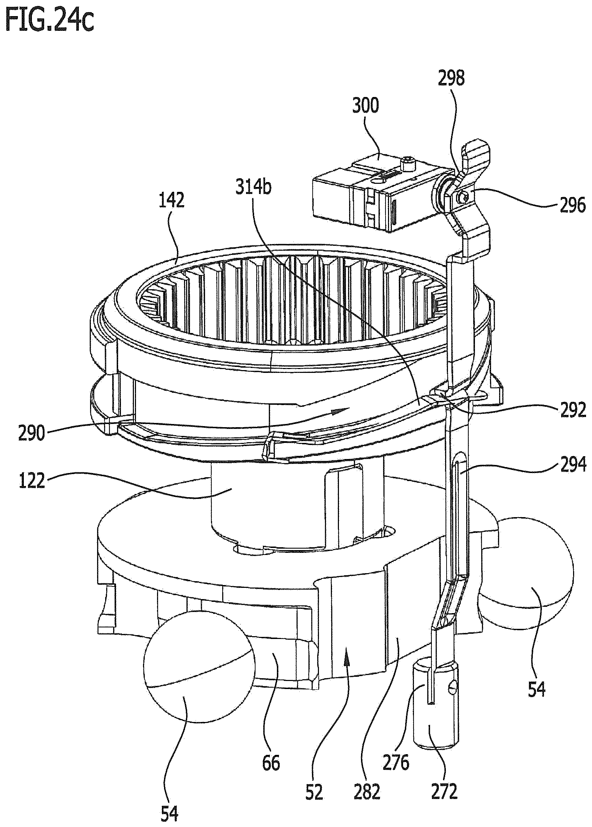

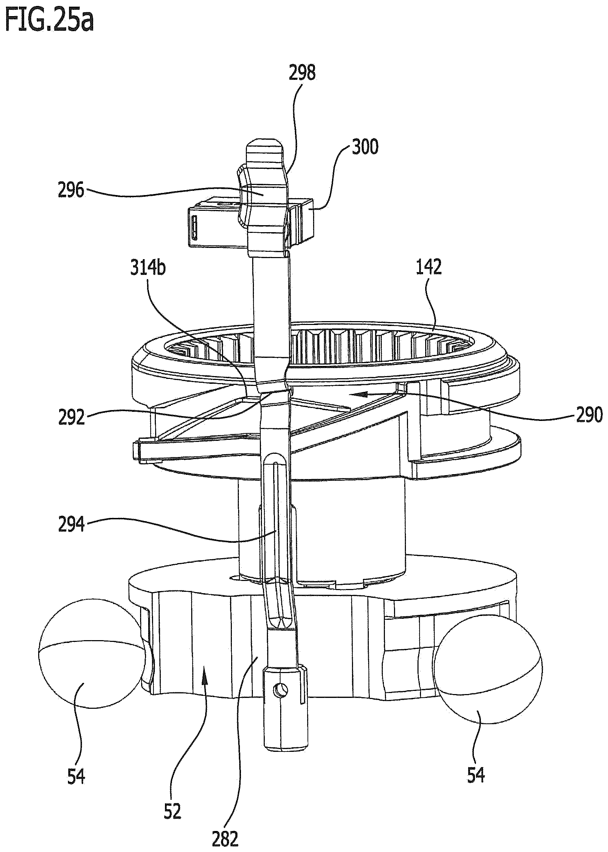

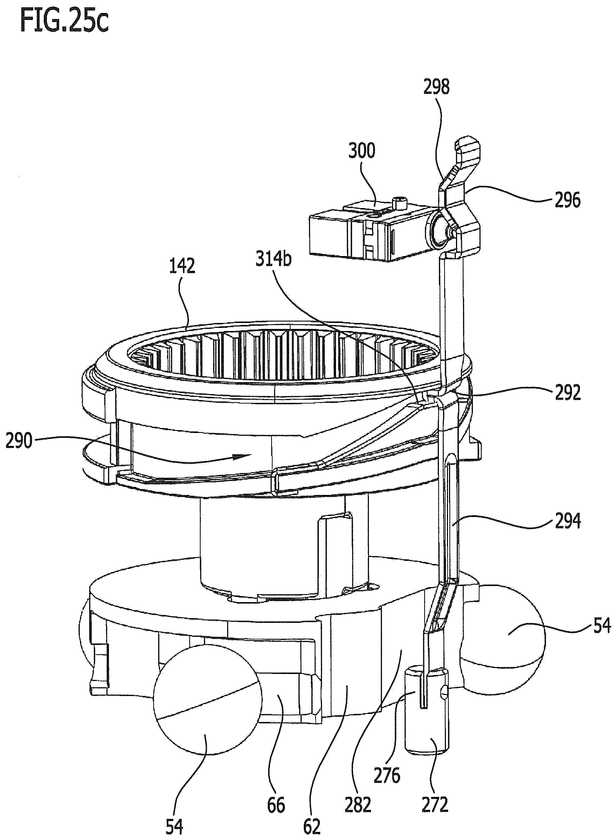

Das heißt, dass nunmehr der Blockierkörper 272 ausgehend von der Stellung in den Fig. 24a und 24c in die Aufnahme 282 eingreift und, wie in Fig. 25a dargestellt, den Betätigungskörper 52 in der Drehblockierstellung sichert.

In diesem Fall wirkt das Sensorbetätigungselement 296 mit dem Positionsangabeelement 298 derart auf den Sensor 300, dass dieser nunmehr die gesicherte Stellung des Blockierkörpers 272 erfasst.

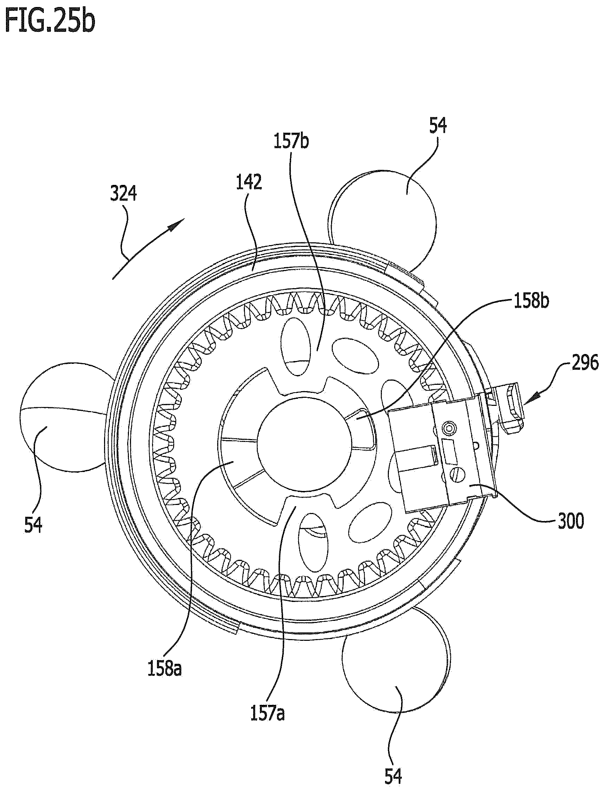

In diesem Fall steht allerdings, wie in Fig. 25b dargestellt, das Hohlrad 142, welches allein durch den Antriebsmotor angetrieben wird, noch in einer Drehstellung, die noch nicht der finalen Ausgangsstellung entspricht.

Aus diesem Grund wird durch den Sensor 300 ein kurzes Antriebssignal für den Antriebsmotor ausgelöst, welches dazu führt, dass der Antriebsmotor in Richtung 324 weitergedreht wird und somit der Kulissenfolger 292 wieder die in Fig. 20 dargestellte Drehstellung erreicht, in welcher die Antriebsstege 157a und 157b wiederum an den Antriebsfingern 158a und 158b anliegen.

Außerdem wird in dieser Drehstellung, wie in Fig. 20a und Fig. 20c erkennbar, der Kulissenfolger 292 durch die beiden Positionierabschnitte 312a und 314c dauerhaft und zuverlässig in einer Stellung positioniert, in welcher der Blockierkörper 272 die Sicherungsstellung nicht verlassen kann.

## Patentansprüche

1. Anhängekupplung, umfassend einen zwischen einer Arbeitsstellung (A) und einer Ruhestellung (R) bewegbaren Kugelhals (10) der an einem ersten Ende mit einer Schwenklagereinheit (20) verbunden ist und an einem zweiten Ende eine Kupplungskugel (18) trägt, wobei mittels der Schwenklagereinheit (20), der Kugelhals (10) zur Ausführung einer Schwenkbewegung um eine Schwenkachse (22) zwischen der Arbeitsstellung (A) und der Ruhestellung (R) verschwenkbar ist, und eine zwischen einem Führungskörper (40) und einem Schwenklagerkörper (14) der Schwenklagereinheit (20) wirkende Drehblockiereinrichtung (50) mit mindestens zwei Drehblockiereinheiten (80), von denen jede einen Drehblockierkörper (54) aufweist, der mittels einer Führungsaufnahme (56) des Führungskörpers (40) in einer Führungsrichtung (58) bewegbar geführt ist und der in der Führungsrichtung (58) durch eine quer zur Führungsrichtung (58) verlaufende, an einem Betätigungskörper (52) vorgesehene Druckfläche (66) bewegbar ist, wobei durch eine Bewegung des Betätigungskörpers (52) in einer Betätigungsrichtung (72) die Drehblockierkörper (54) aller Drehblockiereinheiten (80) in der Führungsrichtung (58) bewegbar und beaufschlagbar sind und wobei die Drehblockierkörper (54) aller Drehblockiereinheiten (80) in der Arbeitsstellung (A) oder der Ruhestellung (R) durch Bewegung in der Führungsrichtung (58) in eine Drehblockierstellung bringbar sind und in dieser jeder Drehblockierkörper (54) mit jeweils einer der mindestens zwei Arbeitsstellungsaufnahmen (60) oder einer der mindestens zwei Ruhestellungsaufnahmen (60R) in Eingriff kommt, um eine Schwenkbewegung des Schwenklagerkörpers (14) und des Führungskörpers (40) relativ zueinander um die Schwenkachse (22) zu blockieren, und wobei die Drehblockierkörper (54) in eine Lösestellung bringbar sind und in dieser mit der jeweiligen Arbeitsstellungsaufnahme (60) oder der jeweiligen Ruhestellungsaufnahme (60R) außer Eingriff stehen und die Schwenkbewegung zwischen dem Schwenklagerkörper (14) und dem Führungskörper (40) freigeben, wobei in allen vorgesehenen relativen Schwenkstellungen zwischen dem Schwenklagerkörper (14) und dem Führungskörper (40), ausgenommen die Arbeitsstellung (A) und die Ruhestellung (R), eine Bewegung des Betätigungskörpers (52) in der Betätigungsrichtung (72) und folglich auch ein kraftbeaufschlagtes Eingreifen der Drehblockierkörper (54) jeder der Drehblockiereinheiten (80) in jeweils eine der Arbeitsstellungsaufnahmen (60A) oder der Ruhestellungsaufnahmen (60R) blockiert ist, **dadurch gekennzeichnet, dass** eine Blockiereinrichtung (270) vorgesehen ist, welche einen Blockierkörper (272) umfasst, der in eine den Betätigungskörper (52) in den Drehblockierstellungen sichernde Sicherungsstellung und eine außerhalb der Sicherungsstellung liegende Bereitschaftsstellung bewegbar ist.

2. Anhängekupplung nach Anspruch 1, **dadurch gekennzeichnet, dass** der Blockierkörper (272) an dem Führungskörper (40) der Schwenklagereinheit (20) geführt ist.

3. Anhängekupplung nach Anspruch 1 oder 2, **dadurch gekennzeichnet, dass** der Blockierkörper (272) in einer am Führungskörper (40) angeordneten Führung (274) geführt ist, dass insbesondere die Führung (274) in einem an den Betätigungskörper (52) angrenzenden Wandbereich (104) des Führungskörpers (40) angeordnet ist und dass insbesondere der Wandbereich (104) zwischen dem Betätigungskörper (52) und dem Schwenklagerkörper (14) angeordnet ist, insbesondere dass der Blockierkörper (272) in der Führung (274) in Richtung ungefähr parallel zu der Schwenkachse (22) bewegbar ist.

4. Anhängekupplung nach einem der voranstehenden Ansprüche, **dadurch gekennzeichnet, dass** der Blockierkörper (272) in der jeweiligen Sicherungsstellung in eine Aufnahme (282) in dem Betätigungskörper (52) eingreift.

5. Anhängekupplung nach einem der voranstehenden Ansprüche, **dadurch gekennzeichnet, dass** der Blockierkörper (272) in der Bereitschaftsstellung angrenzend an den Betätigungskörper (52) positioniert ist.

6. Anhängekupplung nach einem der voranstehenden Ansprüche, **dadurch gekennzeichnet, dass** die Führung (274) für den Blockierkörper (272) in einem an den Betätigungskörper (52) angrenzenden Wandbereich (104) des Führungskörpers (40) angeordnet ist.

7. Anhängekupplung nach einem der Ansprüche 3 bis 6, **dadurch gekennzeichnet, dass** der Blockierkörper (272) in der Sicherungsstellung ausgehend von und geführt durch die Führung (274) jeweils mit einem Ende (276) in die jeweilige Aufnahme (282) des Betätigungskörpers (52) eingreift.

8. Anhängekupplung nach einem der voranstehenden Ansprüche, **dadurch gekennzeichnet, dass** der Blockierkörper (272) durch eine Betätigungseinrichtung (280) in der Sicherungsstellung festlegbar ist, insbesondere dass die Betätigungseinrichtung (280) eine Kulissenführung (290) und einen durch diese bewegbaren Kulissenfolger (292) umfasst, der mit dem Blockierkörper (272) gekoppelt ist, insbesondere dass der Kulissenfolger (292) durch die Kulissenführung (290) ungefähr parallel zur Schwenkachse (22) bewegbar ist, insbesondere dass die Kulissenführung (290) in einer Ebene quer zur Schwenkachse (22) bewegbar ist, insbesondere dass die Kulissenführung (290) durch eine Betätigungseinrichtung (280) bewegbar ist., insbesondere dass die Betätigungseinrichtung (280) einen die Kulissenführung (290) tragenden und relativ zum Kulissenfolger (292) drehend bewegbaren Körper (142) umfasst, insbesondere dass die Kulissenführung (290) mindestens eine auf den Kulissenfolger (292) einwirkende Kulissenbahn (312, 314) aufweist.

9. Anhängekupplung nach Anspruch 8, **dadurch gekennzeichnet, dass** die Kulissenführung (290) zwei auf den Kulissenfolger (292) einwirkende und diesen zwischen sich führende Kulissenbahnen (312, 314) aufweist, insbesondere dass beide Kulissenbahnen (312, 314) zusammen den Kulissenfolger (292) in einer die Sicherungsstellung vorgebenden Stellung festlegen, insbesondere dass eine erste Kulissenbahn (312) einen den Kulissenfolger (292) von der die Sicherungsstellung festlegenden Stellung in eine die Bereitschaftsstellung festlegende Stellung bewegenden Bahnabschnitt (312b) umfasst, dass insbesondere eine zweite Kulissenbahn (314) einen Bahnabschnitt (314b) aufweist, welcher den Kulissenfolger (292) von der der Bereitschaftsstellung entsprechenden Stellung, in eine den Kulissenfolger (292) in Richtung der Sicherungsstellung federelastisch beaufschlagte Stellung bewegt, insbesondere dass die erste Kulissenbahn (312) durch eine Bewegung der Kulissenführung (290) in einer ersten Drehrichtung (322) wirksam ist und dass die zweite Kulissenbahn (314) durch eine Bewegung der Kulissenführung (290) in einer der ersten Drehrichtung (322) entgegengesetzten Drehrichtung (324) wirksam ist, insbesondere dass die Betätigungseinrichtung (280) durch eine Betätigungseinheit (180) für die Drehblockiereinrichtung (50) antreibbar ist, insbesondere dass die Betätigungseinrichtung (280) mit der Betätigungseinheit (180) gekoppelt ist, insbesondere dass die Kulissenbahn (290) an einem drehbaren Körper (142) eines Planetengetriebes (130) der Betätigungseinheit (180) für die Drehblockiereinrichtung (50) angeordnet ist, insbesondere dass die Kulissenbahn (290) an einem Hohlrad (142) eines Planetengetriebes (130) der Betätigungseinheit (180) angeordnet ist.

10. Anhängekupplung nach einem der voranstehenden Ansprüche, **dadurch gekennzeichnet, dass** die Blockiereinrichtung (270) einen die Stellungen des Blockierkörpers (272) erfassenden Sensor (300) aufweist, insbesondere dass der Sensor (300) die Sicherungsstellung und die Bereitschaftsstellung erfasst.

11. Anhängekupplung nach einem der voranstehenden Ansprüche 8 bis 10, **dadurch gekennzeichnet, dass** der Kulissenfolger (292) mittels eines Übertragungselements (294) mit dem Blockierkörper (272) gekoppelt ist, insbesondere dass das Übertragungselement (294) mit einem Sensorbetätigungselement (296) gekoppelt ist.

12. Anhängekupplung nach einem der voranstehenden Ansprüche, **dadurch gekennzeichnet, dass** zwischen den Arbeitsstellungsaufnahmen (60A) und den Ruhestellungsaufnahmen (60R) Blockierflächen (90) verlaufen, gegen welche die Drehblockierkörper (54) anlegbar sind und von welchen ausgehend sich die Arbeitsstellungsaufnahmen (60A) und die Ruhestellungsaufnahmen (60R) erstrecken, dass die Drehblockiereinheiten (80) und die Arbeitsstellungsaufnahmen (60A) sowie die Ruhestellungsaufnahmen (60R) um die Schwenkachse (22) herum derart in Winkelabständen (W) voneinander angeordnet sind, dass in allen vorgesehenen Schwenkstellungen des Schwenklagerkörpers (14) und des Führungskörpers (40) relativ zueinander, ausgenommen die Arbeitsstellung (A) und die Ruhestellung (R), der Drehblockierkörper (54) mindestens einer der Drehblockiereinheiten (80) einer der Blockierflächen (90) gegenüberliegt und somit diese Blockierflächen (90), insbesondere bei einer Kraftbeaufschlagung des Betätigungskörpers (52) in Richtung der Betätigungsrichtung (72), eine Bewegung des Betätigungskörpers (52) in der Betätigungsrichtung (72) und folglich auch ein kraftbeaufschlagtes Eingreifen der Drehblockierkörper (54) jeder der Drehblockiereinheiten (80) in eine der Arbeitsstellungsaufnahmen (60A) oder der Ruhestellungsaufnahmen (60R) blockiert.

13. Anhängekupplung nach einem der voranstehenden Ansprüche, **dadurch gekennzeichnet, dass** die Drehblockiereinheiten (80) zur Bildung einer Drehblockierkonfiguration in Winkelabständen (W) um die Schwenkachse (22) herum angeordnet sind, dass die Arbeitsstellungsaufnahmen (60A) und die Ruhestellungsaufnahmen (60R) zur Bildung jeweils einer Aufnahmenkonfiguration für die Arbeitsstellung (A) und die Ruhestellung (R) in denselben Winkelabständen (W) um die Schwenkachse (22) angeordnet sind wie die Drehblockiereinheiten (80), dass die Drehblockierkonfiguration und die Aufnahmenkonfiguration der Arbeitsstellungsaufnahme (60A) in der Arbeitsstellung (A) beziehungsweise der Ruhestellungsaufnahmen (60R) in der Ruhestellung (R) deckungsgleich zueinander stehen, so dass die Drehblockierkörper (54) in die Arbeitsstellungsaufnahmen beziehungsweise Ruhestellungsaufnahmen eingreifen können, und dass die Winkelabstände (W) zwischen den Drehblockiereinheiten (80) der Drehblockierkonfiguration und die Winkelabstände zwischen den Arbeitsstellungsaufnahmen (60) beziehungsweise den Ruhestellungsaufnahmen (60R) der Aufnahmenkonfigurationen so gewählt sind, dass die Drehblockierkonfiguration und eine der Aufnahmenkonfigurationen nur in der Arbeitsstellung (A) oder der Ruhestellung (R) deckungsgleich zueinander stehen.

14. Anhängekupplung nach einem der Ansprüche 12 oder 13, **dadurch gekennzeichnet, dass** die Winkelabstände (W) mindestens einer der Drehblockiereinheiten (80) zu den in einer Umlaufrichtung um die Schwenkachse (22) sowie zu den entgegengesetzt zu dieser Umlaufrichtung benachbart angeordneten Drehblockiereinheiten (80) ungleich sind, dass in der Arbeitsstellung (A) die Arbeitsstellungsaufnahmen (60A) derart angeordnet sind, dass der Drehblockierkörper (54) jeder der Drehblockiereinheiten (80) mit jeweils einer der Arbeitsstellungsaufnahmen (60A) in Eingriff bringbar ist, dass in der Ruhestellung (R) die Ruhestellungsaufnahmen (60R) derart angeordnet sind, dass der Drehblockierkörper (54) jeder der Drehblockiereinheiten (80) mit jeweils einer der Ruhestellungsaufnahmen (60R) in Eingriff bringbar ist, und dass in allen für den Betrieb vorgesehenen Schwenkstellungen des Schwenklagerkörpers (14) und des Führungskörpers (40) relativ zueinander, die außerhalb der Arbeitsstellung (A) oder der Ruhestellung (R) liegen, der Drehblockierkörper (54) mindestens einer der Drehblockiereinheiten (80) einer zwischen den Arbeitsstellungsaufnahmen (60A) und den Ruhestellungsaufnahmen (60R) verlaufenden Blockierfläche (90) gegenüberliegt, und die Blockierfläche (90), insbesondere bei einer Kraftbeaufschlagung des Betätigungskörpers (52), eine Bewegung des Betätigungskörpers (52) von der Lösestellung in die Drehblockierstellung blockiert.

15. Anhängekupplung nach einem der Ansprüche 12 bis 14, **dadurch gekennzeichnet, dass** die Blockierflächen (90) den Drehblockierkörpern (54) der Drehblockiereinheiten (80) zugewandt verlaufen, insbesondere dass die Blockierflächen (90) in einem definierten Radius um die Schwenkachse (22) verlaufen.

16. Anhängekupplung nach einem der Ansprüche 12 bis 15, **dadurch gekennzeichnet, dass** die Blockierflächen (90) bis zu Öffnungsrändern (92) der Arbeitsstellungsaufnahmen (60A) und der Ruhestellungsaufnahme (60R) verlaufen und in diese übergehen, insbesondere dass die Öffnungsränder (92) der Arbeitsstellungsaufnahmen (60A) und der Ruhestellungsaufnahme (60R) in demselben radialen Abstand von der Schwenkachse (22) liegen wie die Blockierflächen (90).

17. Anhängekupplung nach einem der Ansprüche 12 bis 16, **dadurch gekennzeichnet, dass** mindestens einer der Drehblockierkörper (54) der Drehblockiereinheiten (80) bei einer relativen Schwenkbewegung zwischen Schwenklagerkörper (14) und Führungskörper (40) in Richtung der Arbeitsstellung (A) an einer der Blockierflächen (90) anliegt, insbesondere durch die Einwirkung des Betätigungskörpers (52), kraftbeaufschlagt anliegt.

18. Anhängekupplung nach einem der Ansprüche 12 bis 17, **dadurch gekennzeichnet, dass** die Drehblockierkörper (54) vor Erreichen der Arbeitsstellung (A) an den Blockierflächen (90) kraftbeaufschlagt anliegen und anschließend an Öffnungsrändern (92) der Arbeitsstellungsaufnahmen (60A) kraftbeaufschlagt anliegend in die Arbeitsstellungsaufnahmen (60A) eintreten.

19. Anhängekupplung nach einem der Ansprüche 12 bis 18, **dadurch gekennzeichnet, dass** sich die Arbeitsstellungsaufnahmen (60A) ausgehend von den Blockierflächen (90) in der Führungsrichtung (58), insbesondere mit mindestens einer Komponente in radialer Richtung zur Schwenkachse (22), erstrecken.

20. Anhängekupplung nach einem der voranstehenden Ansprüche, **dadurch gekennzeichnet, dass** mindestens einer der Drehblockierkörper (54) der Drehblockiereinheiten (80) bei einer relativen Schwenkbewegung zwischen Schwenklagerkörper (14) und Führungskörper (40) in Richtung der Ruhestellung (R) an einer der Blockierflächen (90) anliegt, insbesondere durch die Einwirkung des Betätigungskörpers (52), kraftbeaufschlagt anliegt, insbesondere dass die Drehblockierkörper (54) vor Erreichen der Ruhestellung (R) an den Blockierflächen (90) kraftbeaufschlagt anliegen und anschließend an Öffnungsrändern (92) der Ruhestellungsaufahmen (60R) kraftbeaufschlagt anliegend in die Ruhestellungsaufnahmen (60R) eintreten, insbesondere dass sich die Ruhestellungsaufnahmen (60R) ausgehend von den Blockierflächen (90) in der Führungsrichtung (58), insbesondere mit mindestens einer Komponente in radialer Richtung zur Schwenkachse (22), erstrecken.

21. Anhängekupplung nach einem der voranstehenden Ansprüche, **dadurch gekennzeichnet, dass** die Arbeitsstellungsaufnahmen (60A), die Ruhestellungsaufnahmen (60R) und die Blockierflächen (90) der Führungshülse (40) zugewandt angeordnet sind.

22. Anhängekupplung nach einem der voranstehenden Ansprüche, **dadurch gekennzeichnet, dass** der Führungskörper (40) ein Teil der Schwenklagereinheit (20) ist, insbesondere dass in dem Führungskörper (40) alle Führungsaufnahmen (56) für die Drehblockierkörper (54) der Drehblockiereinheiten (80) angeordnet sind, insbesondere dass die Führungsrichtung (58) mit mindestens einer Komponente in radialer Richtung zur Schwenkachse (22) verläuft, insbesondere dass der Führungskörper (40) eine Führungshülse (44) mit Führungsaufnahmen (56) für die Drehblockierkörper (54) der Drehblockiereinheiten (80) aufweist und dass insbesondere die Drehblockierkörper (54) durch den sich in radialer Richtung an den Schwenklagerkörper (14) anschließenden Führungskörper (40) geführt sind, insbesondere dass der Führungskörper (40) ein Schwenklager für den Schwenklagerkörper (14) aufweist, insbesondere der Betätigungskörper (52) relativ zu dem Führungskörper (40) bewegbar geführt ist.

23. Anhängekupplung nach einem der voranstehenden Ansprüche, **dadurch gekennzeichnet, dass** der Betätigungskörper (52) um die Schwenkachse (22) drehbar angeordnet ist und insbesondere sich über einen Winkelbereich um die Schwenkachse (22) erstreckende und in Richtung parallel zur Führungsrichtung (58) variierende Keilflächen (66) vorzugsweise kombiniert mit Rückzugsaufnahmen (62) aufweist, insbesondere dass die Aufnahmen (60) und die Blockierflächen (90) an dem Schwenklagerkörper (14) angeordnet sind.

24. Anhängekupplung nach einem der voranstehenden Ansprüche, **dadurch gekennzeichnet, dass** der Betätigungskörper (52) von dem Führungskörper (40) umschlossen ist und dass insbesondere der Schwenklagerkörper (14) den Führungskörper (40) umgreift, insbesondere dass die Drehblockierkörper (54) um den Betätigungskörper (52) herum angeordnet sind, insbesondere dass der Schwenklagerkörper (14) einen den Führungskörper (40) außenliegend umschließenden Außenkörper bildet, der relativ zu der Schwenklagereinheit (20) in Richtung der Schwenkachse (22) unverschiebbar angeordnet ist, und dass insbesondere der Schwenklagerkörper (14) einen zumindest einen Teilbereich der Drehblockiereinheit (50) außenliegend umschließenden Außenkörper bildet, der relativ zu dem Führungskörper (40) in Richtung der Schwenkachse (22) unverschiebbar angeordnet ist.

25. Anhängekupplung nach einem der voranstehenden Ansprüche, **dadurch gekennzeichnet, dass** der Betätigungskörper (52) durch einen elastischen Kraftspeicher (114) in Richtung seiner Drehblockierstellung beaufschlagt ist, insbesondere dass der Betätigungskörper (52) durch eine Betätigungseinheit (180) von der Drehblockierstellung in die Lösestellung bewegbar ist, insbesondere dass der Betätigungskörper (52) durch die Betätigungseinheit (180) entgegen der Beaufschlagung durch den Kraftspeicher (114) bewegbar ist, insbesondere dass mit der Betätigungseinheit (180) der Betätigungskörper (52) entgegengesetzt zur durch den elastischen Kraftspeicher (114) bewirkten Betätigungsrichtung (72) verdrehbar ist.

26. Anhängekupplung nach einem der voranstehenden Ansprüche, **dadurch gekennzeichnet, dass** die Betätigungseinheit (180) ein Abtriebselement (142) aufweist, welches mit dem Betätigungskörper (52) gekoppelt ist, insbesondere dass das Abtriebselement (142) und der Betätigungskörper (52) über eine Mitnahmekopplungseinrichtung (156, 158) miteinander gekoppelt sind, insbesondere dass die Mitnahmekopplungseinrichtung (156, 158) einen mitnahmefreien Freigangzustand und einen Mitnahmezustand aufweist.
